# EUROPÄISCHE PATENTSCHRIFT

(11) **EP 3 589 875 B1**
(45) Veröffentlichungstag und Bekanntmachung des Hinweises auf die Patenterteilung: **12.05.2021**
(21) Anmeldenummer: 18713628.8
(22) Anmeldetag: 22.03.2018
(51) Int. Cl.: F16L 21/00, F16L 25/14

(54) **VORRICHTUNG ZUM AXIALEN VERBINDEN ZWEIER ROHRELEMENTE**
DEVICE FOR AXIALLY CONNECTING TWO PIPE ELEMENTS
DISPOSITIF PERMETTANT DE RELIER AXIALEMENT DEUX ÉLÉMENTS TUBULAIRES

(30) Priorität: 04.04.2017 DE 102017107258
(43) Veröffentlichungstag der Anmeldung: 08.01.2020
(73) Patentinhaber: Felber, Winfried, 86653 Monheim (DE)
(72) Erfinder: Felber, Winfried, 86653 Monheim (DE)
(74) Vertreter: Hafner & Kohl PartmbB
(86) Internationale Anmeldenummer: PCT/EP2018/057360
(87) Internationale Veröffentlichungsnummer: WO 2018/184864

(56) Entgegenhaltungen:
- EP-A1- 2 988 046
- EP-A1- 3 037 707
- DE-A1-102007 061 288
- DE-A1-102012 005 943
- DE-A1-102012 101 553
- DE-U1-202010 013 624
- DE-U1-202013 101 678

## Beschreibung

Die Erfindung betrifft eine Vorrichtung zum axialen Verbinden zweier Rohrelemente, insbesondere zweier Rohrelemente ungleichen Außendurchmessers, umfassend eine Kupplungseinrichtung mit einem einem ersten Rohrelement zuordenbaren, im Montagezustand der Vorrichtung eine zylinderartige Form aufweisenden ersten Kupplungseinrichtungsteil, einem einem mit dem ersten Rohrelement axial zu verbindenden zweiten Rohrelement zuordenbaren, im Montagezustand der Vorrichtung eine zylinderartige Form aufweisenden zweiten Kupplungseinrichtungsteil.

Eine derartige Vorrichtung zum Verbinden zweier Rohrelemente, d. h. z. B. zweier von einem Fluid durchströmbarer bzw. durchströmter Rohrleitungselemente, ist dem Grunde nach, z. B. aus DE 10 2007 061 288 A1, bekannt und wird beispielsweise im Bereich des Tiefbaus, d. h. insbesondere des Rohrleitungsbaus, oder im Bereich der Abwasser- bzw. Sanitärtechnik eingesetzt.

Von einer entsprechenden Vorrichtung wird eine hohe mechanische Stabilität der über diese herstellbaren bzw. hergestellten Verbindung entsprechender Rohrelemente sowie ein hohes Maß an Flexibilität bzw. Praktikabilität im Hinblick auf die Möglichkeit des Verbindens von Rohrelementen, gegebenenfalls deutlich, unterschiedlichen Außendurchmessers gefordert. Eine entsprechende Vorrichtung sollte entsprechend derart konfiguriert sein, ein äußerst stabiles Verbinden einer Vielzahl an Rohrelementen, gegebenenfalls deutlich, unterschiedlichen Außendurchmessers zu ermöglichen. Dies gilt insbesondere im Hinblick auf die bei einem Verbinden von Rohrelementen (deutlich) unterschiedlicher Außendurchmesser erforderliche Überbrückung großer radialer Stufen; die Vorrichtung soll hier wenigstens in einem typischerweise durch einen Stoßbereich jeweiliger zu verbindender Rohrelemente gebildeten Überbrückungsbereich, insbesondere durch Materialdeformation, möglichst wenig mechanisch beansprucht werden.

Der Erfindung liegt die Aufgabe zugrunde, eine verbesserte Vorrichtung zum axialen Verbinden zweier Rohrelemente bereitzustellen, welche insbesondere eine Überbrückung großer radialer Stufen ermöglicht, ohne im Überbrückungsbereich, insbesondere durch Materialdeformation, besonders mechanisch beansprucht zu werden.

Die Aufgabe wird durch eine Vorrichtung zum axialen Verbinden zweier Rohrelemente, insbesondere ungleichen Außendurchmessers, gemäß Anspruch 1 gelöst. Die hierzu abhängigen Ansprüche betreffen mögliche Ausführungsformen der Vorrichtung.

Die hierin beschriebene Vorrichtung ("Vorrichtung") dient zum axialen Verbinden zweier, insbesondere rohrförmiger, im Betrieb typischerweise von einem Fluid, d. h. einer Flüssigkeit oder einem Gas, durchströmbarer bzw. durchströmter Rohrelemente bzw. Rohrelementabschnitte (im Weiteren ist allein der Begriff Rohrelement in Verwendung) und somit zur Ausbildung einer axialen, typischerweise dichten Verbindung entsprechender Rohrelemente. Die vermittels der Vorrichtung zu verbindenden bzw. verbundenen Rohrelemente sind typischerweise mit jeweiligen jeweilige Stirnflächen bzw. -seiten bildenden Abschnitten einander gegenüber liegend, insbesondere auf Stoß, angeordnet und im Betriebs- bzw. Montagezustand der Vorrichtung unter Ausbildung einer axialen Verbindung außenumfangsseitig von bestimmten Funktionskomponenten der Vorrichtung umgriffen.

Wenngleich sich mit der Vorrichtung selbstverständlich Rohrelemente (im Wesentlichen) gleicher Konfiguration, d. h. insbesondere gleichen Außendurchmessers, stabil verbinden lassen, ist die Vorrichtung insbesondere eingerichtet, Rohrelemente deutlich unterschiedlicher Konfiguration, d. h. insbesondere weit außerhalb eines, z. B. fertigungsbedingten, Toleranzbereichs liegender Außendurchmesser, stabil zu verbinden. Vermittels der Vorrichtung lassen sich sonach erhebliche radiale Stufen bis zu 100 mm oder mehr, zwischen jeweiligen zu verbindenden Rohrelementen überbrücken. Entsprechende vermittels der Vorrichtung zu überbrückende radiale Stufen sind auf die unterschiedlichen Konfigurationen, insbesondere die unterschiedlichen Außendurchmesser, jeweiliger zu verbindender Rohrelemente zurückzuführen. Die vermittels der Vorrichtung herstellbare bzw. hergestellte Verbindung der Rohrelemente lässt sich koaxial bzw. zentrisch ausbilden, d. h. die Symmetrie- bzw. Zentralachsen jeweiliger Rohrelemente fallen (im Wesentlichen) mit der gemeinsamen Symmetrie- bzw. Zentralachse der Vorrichtung zusammen.

Bei einem vermittels der Vorrichtung mit einem zweiten Rohrelement zu verbindenden ersten Rohrelement kann es sich um einen Abschnitt, insbesondere einen Endabschnitt, eines Rohrs handeln. Bei einem mit dem ersten Rohrelement zu verbindenden zweiten Rohrelement kann es sich ebenso um einen Abschnitt, insbesondere einen Endabschnitt, eines Rohrs handeln. Die Vorrichtung kann sonach in Funktion einer Rohrkupplungseinrichtung zum Verbinden zweier Rohre eingerichtet sein. In diesem Fall kann die Vorrichtung als Rohrkupplungseinrichtung bezeichnet bzw. erachtet werden. Bei einem vermittels der Vorrichtung mit einem zweiten Rohrelement zu verbindenden ersten Rohrelement kann es sich jedoch auch um einen fixen rohrförmigen Abschnitt, insbesondere einen rohrförmigen Endabschnitt, einer Flanscheinrichtung handeln. Das zweite Rohrelement ist hier typischerweise Bestandteil einer Kupplungseinrichtung der Vorrichtung. Die Vorrichtung kann sonach in Funktion einer Flanscheinrichtung zum Verbinden eines Rohrelements mit einer Flanscheinrichtung eingerichtet sein. In diesem Fall kann die Vorrichtung als Flanscheinrichtung bezeichnet bzw. erachtet werden.

Selbstverständlich lassen sich vermittels der Vorrichtung - unabhängig von deren Außendurchmesser - Rohrelemente aus chemisch-physikalisch gleichen, ähnlichen oder verschiedenen Materialien verbinden. Beispielsweise lassen sich vermittels der Vorrichtung Rohrelemente aus Baustoffen, insbesondere Beton, Keramik, insbesondere Steinzeug, Kunststoff, Metall, etc., verbinden.

Die Vorrichtung umfasst als zentrale Funktionseinheit eine Kupplungseinrichtung. Die Kupplungseinrichtung umfasst als Funktionskomponenten ein erstes, typischerweise hohlzylinderartiges bzw. hohlzylindrisches, Kupplungseinrichtungsteil, im Weiteren abgekürzt als erstes Kupplungseinrichtungsteil bezeichnet, ein zweites, typischerweise hohlzylinderartiges bzw. hohlzylindrisches, Kupplungseinrichtungsteil, im Weiteren abgekürzt als zweites Kupplungseinrichtungsteil bezeichnet, und ein Zwischenverbindungsteil. Das erste Kupplungseinrichtungsteil ist einem ersten Rohrelement zuordenbar bzw. im Betriebs- bzw. Montagezustand der Vorrichtung zugeordnet. Das zweite Kupplungseinrichtungsteil ist einem mit dem ersten Rohrelement axial zu verbindenden bzw. verbundenen zweiten Rohrelement zuordenbar bzw. im Betriebs- bzw. Montagezustand der Vorrichtung zugeordnet. Das Zwischenverbindungsteil ist zwischen den beiden Kupplungseinrichtungsteilen anordenbar bzw. im Betriebs- bzw. Montagezustand der Vorrichtung angeordnet; mithin sind die beiden Kupplungseinrichtungsteile axial über das Zwischenverbindungsteil miteinander verbindbar bzw. im Betriebs- bzw. Montagezustand der Vorrichtung miteinander verbunden. Die Kupplungseinrichtungsteile und das Zwischenverbindungsteil sind hierfür jeweils mit geeigneten mechanischen Schnittstellen ausgestattet, welche eine axiale Kopplung bzw. Verbindung dieser ermöglichen.

Wie erwähnt, weist das erste Kupplungseinrichtungsteil und das zweite Kupplungseinrichtungsteil typischerweise eine hohlzylindrische Grundform auf bzw. ist mit einer solchen ausgebildet bzw. zu einer solchen ausbildbar. Unter einer hohlzylindrischen Grundform sind grundsätzlich auch von einem geometrisch eindeutigen Hohlzylinder abweichende geometrische Formen, wie z. B. Ellipsen, Ovale, etc., zu verstehen. Die Kupplungseinrichtungsteile sind typischerweise in ihrem Durchmesser veränderbar bzw. reduzierbar, d. h. dehn- bzw. stauchbar. Die Kupplungseinrichtungsteile stellen (im Wesentlichen) diejenigen Funktionskomponenten der Vorrichtung dar, welche jeweilige miteinander zu verbindende Rohrelemente außenumfangsseitig umgreifen; das erste Kupplungseinrichtungsteil umgreift das diesem zugeordnete erste Rohrelement im Bereich dessen Außendurchmessers bzw. -umfangs, das zweite Kupplungseinrichtungsteil umgreift das diesem zugeordnete zweite Rohrelement im Bereich dessen Außendurchmessers bzw. - umfangs. Mithin bilden jeweilige Kupplungseinrichtungsteile im Betriebs- bzw. Montagezustand der Vorrichtung zylindrische Anlagebereiche für jeweilige Rohrelemente; dies gilt auch, wenn zwischen die Kupplungseinrichtungsteile und die Rohrelemente ein, insbesondere hohlzylindrisches, Dichtelement geschaltet ist.

Das Zwischenverbindungsteil kann (ebenso) eine hohlzylindrische, d. h. insbesondere eine ringartige bzw. -förmige, Grundform aufweisen. Wesentlich ist, dass sich das Zwischenverbindungsteil im Betriebs- bzw. Montagezustand der Vorrichtung in eine konusartige bzw. -förmige Grundform - hierunter sind auch von einem geometrisch eindeutigen Konus abweichende, d. h. z. B. bogenartige bzw. -förmige, Grundformen zu verstehen, bringen lässt. Das Zwischenverbindungsteil wird insbesondere im Zusammenhang mit der beschriebenen, bei einem axialen Verbinden zweier Rohrelemente (deutlich) ungleichen Außendurchmessers erforderlichen Überbrückung einer radialen Stufe in eine entsprechende konusartige bzw. -förmige Grundform gebracht. Insgesamt kann sich derart, insbesondere bei der Überbrückung radialer Stufen, eine Kupplungseinrichtung mit einer (hohl)zylindrisch-konusartig-(hohl)zylindrischen geometrischen Gestalt ergeben. Die (hohl)zylindrischen Abschnitte sind durch die Kupplungseinrichtungsteile, der konusartige Abschnitt ist durch das Zwischenverbindungsteil gebildet.

An dem ersten Kupplungseinrichtungsteil, an dem zweiten Kupplungseinrichtungsteil und an dem Zwischenverbindungsteil ist jeweils wenigstens ein erstes Gelenkelement und/oder wenigstens ein zweites Gelenkelement ausgebildet oder angeordnet. Ein jeweiliges erstes Gelenkelement ist als Eingriffselement zum Eingriff in einen Aufnahmebereich eines zweiten Gelenkelements ausgebildet. Ein jeweiliges zweites Gelenkelement ist als ein einen Aufnahmebereich zur zumindest abschnittsweisen Aufnahme eines Eingriffselements eines ersten Gelenkelements umfassendes Aufnahmeelement ausgebildet. Ein erstes Gelenkelement lässt sich sonach in einem zweiten Gelenkelement aufnehmen, wodurch gleichermaßen wenigstens eine axiale Verbindung jeweiliger Gelenkelemente ausgebildet ist. Ein erstes und ein zweites Gelenkelement sind damit eingerichtet, im Sinne von miteinander verbindbaren Verbindungspartnern zusammenzuwirken. Das Zusammenwirken eines ersten Gelenkelements mit einem zweiten Gelenkelement resultiert sonach in einer axialen Kopplung bzw. Verbindung jeweiliger Gelenkelemente bzw. der diesen zugehörigen Funktionskomponenten der Kupplungseinrichtung.

Die Kupplungseinrichtungsteile und das Zwischenverbindungsteil sind über die an diesen ausgebildeten oder angeordneten ersten und/oder zweiten Gelenkelemente derart konfiguriert, dass sich die erwähnte axiale Kopplung bzw. Verbindung der Kupplungseinrichtungsteile unter Zwischenschaltung des Zwischenverbindungsteils ausbilden lässt. Ein jeweiliges kupplungseinrichtungsteilseitiges erstes Gelenkelement korrespondiert sonach mit einem jeweiligen zwischenverbindungsteilseitigen zweiten Gelenkelement, ein jeweiliges kupplungseinrichtungsteilseitiges zweites Gelenkelement korrespondiert sonach mit einem jeweiligen zwischenverbindungsteilseitigen ersten Gelenkelement, sodass sich mit der Maßgabe, dass sich jeweilige Kupplungseinrichtungsteile unter Zwischenschaltung des Zwischenverbindungsteils axial miteinander koppeln bzw. verbinden lassen, beliebige Konfigurationsmöglichkeiten jeweiliger erster und zweiter Gelenkelemente ergeben. Gemäß einer rein beispielhaften Konfigurationsmöglichkeit sind an den Kupplungseinrichtungsteilen zweite Gelenkelemente angeordnet oder ausgebildet und dem Zwischenverbindungsteil erste Gelenkelemente angeordnet oder ausgebildet.

Es wurde erwähnt, dass das Zusammenwirken eines ersten Gelenkelements mit einem zweiten Gelenkelement in einer Kopplung bzw. Verbindung jeweiliger Gelenkelemente resultiert. Ein an dem ersten oder zweiten Kupplungseinrichtungsteil ausgebildetes oder angeordnetes erstes Gelenkelement ist dabei eingerichtet, mit einem an dem Zwischenverbindungsteil ausgebildeten oder angeordneten zweiten Gelenkelement, insbesondere formschlüssig, unter Ausbildung einer Gelenkverbindung, d. h. insbesondere einer Drehgelenkverbindung, gegebenenfalls einer Kugelgelenkverbindung, zwischen dem ersten oder zweiten Kupplungseinrichtungsteil und dem Zwischenverbindungsteil zusammenzuwirken. In analoger Weise ist ein an dem ersten oder zweiten Kupplungseinrichtungsteil ausgebildetes oder angeordnetes zweites Gelenkelement eingerichtet, mit einem an dem Zwischenverbindungsteil ausgebildeten ersten Gelenkelement, insbesondere formschlüssig, unter Ausbildung einer Gelenkverbindung, d. h. insbesondere einer Drehgelenkverbindung, zwischen dem ersten oder zweiten Kupplungseinrichtungsteil und dem Zwischenverbindungsteil zusammenzuwirken.

Ein ein erstes Gelenkelement bildendes Eingriffselement kann z. B. als ein eine Gelenkachse definierender, insbesondere zylinderartiger, Gelenkzapfen ausgebildet sein oder einen solchen umfassen. Ein ein zweites Gelenkelement bildendes Aufnahmeelement kann z. B. als eine, insbesondere korrespondierende, Gelenkzapfenaufnahme ausgebildet sein oder eine solche umfassen.

Jeweilige erste Gelenkelemente können im in jeweiligen zweiten Gelenkelementen aufgenommenen Zustand über, z. B. form- und/oder kraftschlüssig, wirkende Befestigungselemente, z. B. an einem ersten bzw. zweiten Kupplungseinrichtungsteil, befestigt sein. Bei entsprechenden Befestigungselementen kann es sich z. B. um jeweilige erste Gelenkelemente, insbesondere im Bereich einer durch jeweilige erste Gelenkelemente definierten Gelenkachse, d. h. typischerweise in Umfangsrichtung, durchsetzende Befestigungsbolzen bzw. -stifte bzw. -splints handeln.

Die Möglichkeit der Ausbildung einer Gelenkverbindung, worunter, wie erwähnt, insbesondere eine Drehgelenkverbindung zu verstehen ist, zwischen dem ersten Kupplungseinrichtungsteil und dem Zwischenverbindungsteil sowie zwischen dem zweiten Kupplungseinrichtungsteil und dem Zwischenverbindungsteil resultiert in einer deutlich verbesserten Vorrichtung. Die Gelenkverbindung ist zur Aufnahme von axial wirkenden Normalkräften und radial wirkenden Quer- bzw. Scherkräften eingerichtet und stellt eine Möglichkeit dar, Rohrelemente (deutlich) unterschiedlichen Außendurchmessers ohne Materialdeformation der Vorrichtung in dem typischerweise durch einen Stoßbereich der zu verbindenden Rohrelemente gebildeten Überbrückungsbereich zu ermöglichen. Mithin lassen sich unerwünschte deformationsbedingte Materialreaktionen, d. h. z. B. die Ausbildung so genannter Weißbrüche bei Ausbildung der Kupplungseinrichtungsteile bzw. des Zwischenverbindungsteils aus bestimmten Kunststoffmaterialien, verhindern. Die Gelenkverbindung ermöglicht eine, typischerweise stufenlose, gelenkige Auslenkung bzw. Auswinkelung des Zwischenverbindungsteils relativ zu den Kupplungseinrichtungsteilen und umgekehrt; der hierfür erforderliche Kraftaufwand geht gegen "Null", die Überbrückung radialer Stufen ist damit quasi widerstandslos möglich. Die Gelenkverbindung ermöglicht dabei eine sehr hohe Aufnahme von radial wirkenden Quer- bzw. Scherkräften, sodass im Betriebs- bzw. Montagezustand der Vorrichtung quer- bzw. scherkraftbedingte radiale Relativbewegungen der zu verbindenden Rohrelemente (nahezu) ausgeschlossen sind. Die erwähnte Koaxialität der durch die Vorrichtung hergestellten Verbindung der Rohrelemente lässt sich damit auch bei einem Verbinden von Rohrelementen (deutlich) ungleichen Außendurchmessers bzw. der hierfür erforderlichen Überbrückung (erheblicher) radialer Stufen gewährleisten. Die Vorrichtung ermöglicht es damit, (nahezu) jedwede Rohrelementkombination gleicher oder ungleicher Konfiguration, d. h. insbesondere gleichen oder ungleichen Außendurchmessers, stabil miteinander zu verbinden.

Insgesamt liegt damit eine gegenüber dem eingangs genannten Stand der Technik verbesserte Vorrichtung zum axialen Verbinden zweier Rohrelemente vor.

Die durch Zusammenwirken eines an dem ersten oder zweiten Kupplungseinrichtungsteil ausgebildeten ersten Gelenkelements mit einem an dem Zwischenverbindungsteil ausgebildeten zweiten Gelenkelement ausgebildete Gelenkverbindung bzw. die durch Zusammenwirken eines an dem ersten oder zweiten Kupplungseinrichtungsteil ausgebildeten zweiten Gelenkelements mit einem an dem Zwischenverbindungsteil ausgebildeten ersten Gelenkelement ausgebildete Gelenkverbindung ermöglicht ein, typischerweise stufenloses, Verschwenken des Zwischenverbindungsteils in mehrere, d. h. insbesondere nahezu beliebige, Schwenkstellungen relativ zu dem ersten und/oder zweiten Kupplungseinrichtungsteil. Das Zwischenverbindungsteil kann z. B. in einem Winkelbereich zwischen 0 und ± 180° bezüglich einer Zentralachse der Vorrichtung, bevorzugt in einem Winkelbereich zwischen 0 und ±90° bezüglich der Zentralachse der Vorrichtung, relativ zu einem Kupplungseinrichtungsteil verschwenkt werden. Die (stufenlose) Verschwenkbarkeit des Zwischenverbindungsteils relativ zu den Kupplungseinrichtungsteilen trägt zu der erwähnten Möglichkeit bei, mit der Vorrichtung (nahezu) jedwede Rohrelementkombination gleicher oder ungleicher Konfiguration, d. h. insbesondere gleichen oder ungleichen Außendurchmessers, stabil miteinander zu verbinden.

Die Gelenkverbindung des ersten Kupplungseinrichtungsteils mit dem Zwischenverbindungsteil und die Gelenkverbindung des zweiten Kupplungseinrichtungsteils mit dem Zwischenverbindungsteil ist im Betriebs- bzw. Montagezustand der Vorrichtung typischerweise in allen Schwenkstellungen des Zwischenverbindungsteils relativ zu dem ersten und/oder zweiten Kupplungseinrichtungsteil unverlierbar bzw. nicht lösbar. Die Gelenkverbindung des ersten Kupplungseinrichtungsteils mit dem Zwischenverbindungsteil und die Gelenkverbindung des zweiten Kupplungseinrichtungsteils mit dem Zwischenverbindungsteil sind sonach typischerweise derart ausgebildet, dass im Betriebs- bzw. Montagezustand der Vorrichtung auch in extremen Schwenkstellungen, in welchen das Zwischenverbindungsteil durch entsprechend starke Verschwenkung extrem relativ zu den Kupplungseinrichtungsteilen ausgewinkelt bzw. verschwenkt ist, ein Lösen der Gelenkverbindung, z. B. durch eine Bewegung eines in einem Aufnahmeelement aufgenommenen Eingriffselements aus dem Aufnahmeelement, nicht möglich ist.

Wie erwähnt, lässt sich das Zwischenverbindungsteil im Betriebs- bzw. Montagezustand der Vorrichtung in eine konusartige bzw. -förmige Grundform bringen; insbesondere ist das Zwischenverbindungsteil im Zusammenhang mit der bei einem axialen Verbinden zweier Rohrelemente (deutlich) ungleichen Außendurchmessers erforderlichen Überbrückung einer radialen Stufe in eine entsprechende konusartige bzw. -förmige Grundform gebracht. Die Ausbildung der konusartigen Grundform des Zwischenverbindungsteils ist im Betriebs- bzw. Montagezustand der Vorrichtung typischerweise durch eine entsprechende Verschwenkung des Zwischenverbindungsteils zu den Kupplungseinrichtungsteilen realisiert. Die Vorrichtung ist sonach durch ein Verschwenken des Zwischenverbindungsteils relativ zu dem ersten und/oder zweiten Kupplungseinrichtungsteil mit einem sich in axialer Richtung zwischen dem ersten und dem zweiten Kupplungseinrichtungsteil erstreckenden konusartig bzw. -förmig verlaufenden Mittelbereich ausbildbar.

Das Zwischenverbindungsteil kann wenigstens einen, insbesondere stegartigen bzw. - förmigen oder quaderartigen bzw. -förmigen, Grundabschnitt umfassen. Einzelne, mehrere oder sämtliche Grundabschnitt(e) stellt bzw. stellen in allen Geometrien typischerweise ein in sich steifes Bauteil dar. Ein an dem Zwischenverbindungsteil ausgebildetes erstes Gelenkelement, sofern vorhanden, kann unmittelbar an dem Grundabschnitt ausgebildet sein; dies gilt insbesondere für stegartige Grundabschnitte. Ein Zwischenverbindungsteil kann hier z. B. eine knochen- oder Doppel-T-Träger-artige geometrische Gestalt aufweisen. Denkbar ist es auch, dass ein an dem Zwischenverbindungsteil ausgebildetes erstes Gelenkelement, sofern vorhanden, an einem, insbesondere in axialer Richtung, stegartig von dem Grundabschnitt abragenden Ansatz ausgebildet sein kann. Ein an dem Zwischenverbindungsteil ausgebildetes zweites Gelenkelement, sofern vorhanden, kann durch eine einen Aufnahmebereich bildende Ausnehmung oder Aussparung in dem Grundabschnitt ausgebildet sein.

Auch das erste und/oder zweite Kupplungseinrichtungsteil kann einen, insbesondere quaderartigen bzw. -förmigen, Grundabschnitt umfassen. Ein entsprechender Grundabschnitt stellt typischerweise ein in sich steifes Bauteil dar. Ein an dem ersten und/oder zweiten Kupplungseinrichtungsteil ausgebildetes erstes Gelenkelement, sofern vorhanden, kann an einem, insbesondere in axialer Richtung, stegartig von dem Grundabschnitt abragenden Ansatz ausgebildet sein. Ein an dem ersten und/oder zweiten Kupplungseinrichtungsteil ausgebildetes zweites Gelenkelement, sofern vorhanden, kann durch eine einen Aufnahmebereich bildende Ausnehmung in dem Grundabschnitt ausgebildet sein.

Die Ausnehmung in einem Grundabschnitt eines Kupplungseinrichtungsteils bzw. in einem Grundabschnitt des Zwischenverbindungsteils kann durch wenigstens ein, insbesondere mehrere, die Ausnehmung definierende(s) Wandungselement(e) des Grundabschnitts gebildet sein, wobei das wenigstens eine oder wenigstens ein Wandungselement eine axiale Auszugssicherung für ein in den Aufnahmebereich eingreifendes Eingriffselement eines ersten Gelenkelements bildet, welche im Betriebs- bzw. Montagezustand der Vorrichtung eine axiale Bewegung des ersten Gelenkelements in Richtung des axial gegenüber liegenden Kupplungseinrichtungsteils verhindert. Das die axiale Auszugssicherung bildende Wandungselement kann ein in den Aufnahmebereich eingreifendes Eingriffselement eines ersten Gelenkelements abschnittsweise, insbesondere formschlüssig, um- und/oder übergreifen. Durch eine entsprechende axiale Auszugssicherung eines ersten Gelenkelements ist sonach eine in axialer Richtung ausgesprochen stabile Verbindung der Kupplungseinrichtungsteile mit dem Zwischenverbindungsteil gewährleistet. Die Stabilität der vermittels der Vorrichtung herstellbaren bzw. hergestellten Verbindung zweier Rohrelemente ist damit insgesamt verbessert.

Die Ausnehmung in einem Grundabschnitt eines Kupplungseinrichtungsteils bzw. in einem Grundabschnitt des Zwischenverbindungsteils kann ferner durch wenigstens ein, insbesondere mehrere, die Ausnehmung definierende(s) Wandungselement(e) des Grundabschnitts gebildet sein, wobei das wenigstens eine oder wenigstens ein Wandungselement eine radiale Auszugssicherung für ein in den Aufnahmebereich eingreifendes Eingriffselement eines ersten Gelenkelements bildet, welche im Betriebs- bzw. Montagezustand der Vorrichtung eine radiale Bewegung des ersten Gelenkelements relativ zu dem Kupplungseinrichtungsteil verhindert. Das die radiale Auszugssicherung bildende Wandungselement kann ein in den Aufnahmebereich eingreifendes Eingriffselement eines ersten Gelenkelement abschnittsweise, insbesondere formschlüssig, um- und/oder übergreifen. Durch eine entsprechende radiale Auszugssicherung eines ersten Gelenkelements ist sonach eine in radialer Richtung ausgesprochen stabile Verbindung der Kupplungseinrichtungsteile mit dem Zwischenverbindungsteil gewährleistet. Die Stabilität der vermittels der Vorrichtung herstellbaren bzw. hergestellten Verbindung zweier Rohrelemente ist damit insgesamt verbessert.

Eine jeweilige Ausnehmung in einem Grundabschnitt eines Kupplungseinrichtungsteils bzw. in einem Grundabschnitt des Zwischenverbindungsteils kann in radialer Richtung bezüglich der Symmetrie- bzw. Zentralachse der Vorrichtung in radialer Richtung nach außen oder innen offen sein. Derart ist eine einfache Montage und Demontage der Vorrichtung ermöglicht. Für eine Montage der Vorrichtung werden jeweilige Eingriffselemente in radialer Richtung in jeweiligen Ausnehmungen angeordnet. Für eine Demontage der Vorrichtung werden jeweilige in jeweiligen Ausnehmungen angeordnete Eingriffselemente in radialer Richtung aus jeweiligen Ausnehmungen entfernt.

Die axialen Abmessungen (Länge) einer jeweiligen Ausnehmung in einem Grundabschnitt eines Kupplungseinrichtungsteils sind grundsätzlich frei wählbar. Eine Ausnehmung kann sich damit in axialer Richtung teilweise oder vollständig durch den Grundabschnitt des jeweiligen Kupplungseinrichtungsteils erstrecken. Ein entsprechender von einem zwischenverbindungsteilseitigen Grundabschnitt axial abragender stegartiger Absatz kann in axialer Richtung derart bemessen sein, dass er sich im Montagezustand axial vollständig durch eine jeweilige kupplungseinrichtungsteilseitige Ausnehmung erstreckt; ein stegartiger Ansatz kann einen Grundabschnitt eines Kupplungseinrichtungsteils sonach axial durchsetzen, sodass ein an einem stegartigen Ansatz ausgebildetes oder angeordnetes Gelenkelement an einem axial äußeren Ende des Grundabschnitts anliegen kann. Auch die radialen Abmessungen (Höhe) jeweiliger Ausnehmungen bzw. der Grundabschnitte insgesamt sind grundsätzlich frei wählbar. Durch die Wahl der axialen Abmessungen (Länge) des stegartigen Ansatzes bzw. entsprechend der axialen bzw. radialen Abmessungen der Ausnehmung kann eine Hebelwirkung und damit die Übertragung von Kräften, d. h. insbesondere von Quer- bzw. Scherkräften, des stegartigen Ansatzes realisiert bzw. gezielt beeinflusst werden. Gleichermaßen kann durch die Wahl der axialen Abmessungen des stegartigen Ansatzes bzw. entsprechend der axialen Ausnehmung eine unerwünschte umfangsrichtungsmäßige Auswinkelung des Zwischenverbindungsteils zu dem jeweiligen Kupplungseinrichtungsteil verhindert werden.

Im Betriebs- bzw. Montagezustand der Vorrichtung sind jeweilige Ausnehmungen typischerweise verschlossen, sodass in diesen angeordnete Eingriffselemente nicht aus diesen entfernt werden können. Jeweilige in radialer Richtung bezüglich der Zentralachse der Vorrichtung offene Ausnehmungen in jeweiligen Grundabschnitten eines ersten und/oder zweiten Kupplungseinrichtungsteils münden typischerweise in einen sich in Umfangsrichtung um das erste oder zweite Kupplungseinrichtungsteil erstreckenden Aufnahmekanal zur Aufnahme eines das erste oder zweite Kupplungseinrichtungsteil in Umfangsrichtung umspannenden, insbesondere band-, manschetten- oder schellenartigen, Spannelements. Die Ausnehmungen können sonach in radialer Richtung durch ein in dem Aufnahmekanal aufnehmbares bzw. aufgenommenes Spannelement zumindest abschnittsweise, insbesondere vollständig, verschließbar sein, insbesondere derart, dass ein in dem Aufnahmebereich aufgenommenes Eingriffselement in radialer Richtung nicht aus der Ausnehmung bzw. dem Aufnahmebereich bewegbar ist.

Für eine beispielhafte Konfiguration der Kupplungseinrichtung mit an den Kupplungseinrichtungsteilen ausgebildeten oder angeordneten zweiten Gelenkelementen und an dem Zwischenverbindungsteil ausgebildeten oder angeordneten ersten Gelenkelementen gilt, dass ein jeweiliger Aufnahmebereich eines kupplungseinrichtungsteilseitigen zweiten Gelenkelements einen ersten Aufnahmebereichsabschnitt, welcher im Betriebs- bzw. Montagezustand der Vorrichtung einen von einem Grundabschnitt eines Zwischenverbindungsteils stegartig abragenden Ansatz aufnimmt und einen, insbesondere mit dem ersten Aufnahmebereichsabschnitt kommunizierenden, zweiten Aufnahmebereichsabschnitt, welcher im Betriebs- bzw. Montagezustand der Vorrichtung ein an dem stegartigen Ansatz ausgebildetes erstes Gelenkelement aufnimmt, umfassen kann. Derart lässt sich eine, insbesondere in axialer Richtung, besonders kompakt ausgeführte Vorrichtung realisieren. Analoges gilt selbstverständlich für andere Konfigurationen der Kupplungseinrichtung.

Ein Grundabschnitt eines ersten und/oder zweiten Kupplungseinrichtungsteils kann im Bereich seines im Betriebs- bzw. Montagezustand der Vorrichtung einem Zwischenverbindungsteil in axialer Richtung zugewandten freien Endes mit einer, insbesondere gewölbt verlaufenden, Führungsfläche ausgebildet sein. Ein Grundabschnitt eines Zwischenverbindungsteils kann im Bereich eines im Betriebs- bzw. Montagezustand der Vorrichtung einem ersten oder zweiten Kupplungseinrichtungsteil in axialer Richtung zugewandten freien Endes mit einer, gegebenenfalls korrespondierenden, insbesondere gegengleich gewölbt verlaufenden, Gegenführungsfläche ausgebildet sein. Jeweilige Führungs- und Gegenführungsflächen dienen einerseits dazu, geführte Bewegungen des Zwischenverbindungsteils relativ zu den Kupplungseinrichtungsteilen zu ermöglichen. Jeweilige zwischenverbindungsteilseitige Gegenführungsflächen sind (bei Schwenkbewegungen des Zwischenverbindungsteils) typischerweise relativ zu dem ersten und/oder zweiten Kupplungseinrichtungsteil entlang jeweiliger kupplungseinrichtungsteilseitiger Führungsflächen bewegbar. Andererseits dienen jeweilige einander in axialer Richtung zugewandte Führungs- und Gegenführungsflächen dazu, gegebenenfalls im Betrieb der Vorrichtung auftretende in axialer Richtung wirkende Kräfte aufzunehmen. Die Führungs- bzw. Gegenführungsflächen können insoweit auch als axiale Anschlag- bzw. Gegenanschlagflächen bezeichnet bzw. erachtet werden, welche zur Aufnahme von in axialer Richtung wirkenden Kräften eingerichtet sind. Durch die gegebenenfalls auch als Gelenkschalen zu erachtenden Führungs- bzw. Gegenführungsflächen ist zusätzlich zu der durch die in jeweiligen zweiten Gelenkelementen aufgenommenen ersten Gelenkelemente realisierten Führung eine weitere Führung des Zwischenverbindungsteils zu jeweiligen Kupplungseinrichtungsteilen möglich, weshalb die beschriebene Gelenkverbindung doppelt geführt ist, wodurch jede gewünschte statische Auslegung hinsichtlich axial wirkender Druck- und Zugbeanspruchgen möglich ist.

Ein jeweiliger kupplungseinrichtungsteilseitiger Grundabschnitt kann mit einer eine Gelenkendstellung des Zwischenverbindungsteils relativ dem jeweiligen Kupplungseinrichtungsteil definierenden radialen Anschlagfläche ausgebildet sein. Durch die Definition entsprechender Gelenkendstellungen kann die Stabilität der Vorrichtung weiter erhöht werden, da eine Auswinkelung bzw. Verschwenkung des Zwischenverbindungsteils relativ zu den Kupplungseinrichtungsteilen nur in definiertem Maße möglich ist. Eine jeweilige radiale Anschlagfläche kann als eine in axialer Richtung mit einem bestimmten Neigungswinkel bezüglich der Zentralachse der Vorrichtung rampenartig verlaufenden Rampenfläche ausgebildet sein. Durch den Neigungswinkel der Rampenfläche ist der jeweilige Winkel der Gelenkendstellung des Zwischenverbindungsteils relativ zu dem jeweiligen Kupplungseinrichtungsteil definierbar bzw. definiert.

Wenngleich weiter oben jeweils beispielhaft als quaderartig bzw. -förmig beschrieben, können jeweilige Grundabschnitt eines Zwischenverbindungsteils bzw. jeweilige Grundabschnitte eines ersten und/oder zweiten Kupplungseinrichtungsteils selbstverständlich auch andere Grundformen bzw. Geometrien, d. h. insbesondere andere Querschnittsgeometrien, aufweisen. Beispielsweise kann ein Grundabschnitt eines Zwischenverbindungsteils, wie erwähnt, auch eine stegartige Grundform bzw. Geometrie aufweisen.

Das Zwischenverbindungsteil kann in Umfangsrichtung segmentiert ausgebildet sein. Das segmentiert und somit mehrteilig bzw. -stückig ausgebildete Zwischenverbindungsteil kann mehrere in Umfangsrichtung zu dem Zwischenverbindungsteil verbindbare, jeweils wenigstens einen Grundabschnitt umfassende Zwischenverbindungsteilsegmente umfassen. Jedes Zwischenverbindungsteilsegment umfasst damit wenigstens einen Grundabschnitt. Jedes Zwischenverbindungsteilsegment erstreckt sich in Umfangsrichtung um einen Anteil der umfangsrichtungsmäßigen Gesamterstreckung des Zwischenverbindungsteils.

Jeweilige Zwischenverbindungsteilsegmente können, insbesondere im Bereich ihrer im Betriebs- bzw. Montagezustand der Vorrichtung in Umfangsrichtung benachbart angeordneten Grundabschnittbereiche, mit Verbindungselementen ausgebildet sein, welche zur, insbesondere (beschädigungs- bzw. zerstörungsfrei) lösbaren Verbindung unmittelbar benachbart angeordneter Zwischenverbindungsteilsegmente in Umfangsrichtung ausgebildet sind. Jeweilige Verbindungselemente können als Formschlusselemente, d. h. z. B. als Steckelemente, Rast-/Schnappelemente, etc., ausgebildet sein, welche unter Ausbildung einer formschlüssigen Verbindung jeweiliger benachbart angeordneter Zwischenverbindungsteilsegmente, insbesondere in Umfangsrichtung, zusammenwirken.

Wie erwähnt, umfasst ein Zwischenverbindungsteilsegment wenigstens einen Grundabschnitt. Für ein mehrere in Umfangsrichtung benachbart angeordnete Grundabschnitte umfassendes Zwischenverbindungsteilsegment gilt, dass mehrere in Umfangsrichtung unmittelbar benachbart angeordnete Grundabschnitte über wenigstens ein in Umfangsrichtung dehn- und/oder stauchbares, insbesondere faltenartiges, Strukturelement miteinander verbunden sein können. Durch die Ausbildung oder Anordnung entsprechender Strukturelemente zwischen in Umfangsrichtung unmittelbar benachbart angeordneten Grundabschnitten eines jeweiligen Zwischenverbindungsteilsegments weist das Zwischenverbindungsteilsegment in Umfangsrichtung dehn- und/oder stauchbare Eigenschaften auf. Die Strukturelemente sind typischerweise derart beschaffen, dass diese raumgebend eine umfangsrichtungsmäßige Dehnung und/oder Stauchung eines jeweiligen Zwischenverbindungsteilsegments ermöglichen. Das aus mehreren entsprechenden Zwischenverbindungsteilsegmenten gebildete Zwischenverbindungsteil lässt sich im Betriebs- bzw. Montagezustand der Vorrichtung sonach in Umfangsrichtung dehnen bzw. stauchen, was für die erwähnte vermittels der Vorrichtung mögliche Verbindung von Rohrelementen jedweder Art vorteilhaft ist.

Ein entsprechendes Strukturelement kann z. B. durch mehrere winklig, insbesondere V-förmig, zueinander ausgerichtete Strukturelementabschnitte ausgebildet sein. Durch entsprechende Strukturelementabschnitte können (weitgehend) axial verlaufende Schlitzstrukturen gebildet sein. In allen Fällen geben entsprechende Schlitzstrukturen ausreichend Raum für eine entsprechende Dehnung- bzw. Stauchung jeweiliger Zwischenverbindungsteilsegmente bzw. des Zwischenverbindungsteils in Umfangsrichtung.

Entsprechende Strukturelementabschnitte können derart beabstandet sein, dass diese im Betriebs- bzw. Montagezustand der Vorrichtung im Bereich des Innenumfangs der Vorrichtung in Umfangsrichtung (im Wesentlichen) unmittelbar aneinander anliegen. Der Innenumfang des Zwischenverbindungsteils kann im Betriebs- bzw. Montagezustand der Vorrichtung sonach (im Wesentlichen) geschlossen sein. Einem gegebenenfalls vorhandenen, zwischen die Kupplungseinrichtung und die zu verbindenden Rohrelemente geschalteten, insbesondere hohlzylindrischen, Dichtelement ist damit keine Möglichkeit gegeben, in radialer Richtung in Spalträume, welche sich z. B. zwischen in Umfangsrichtung benachbart angeordneten Strukturelementabschnitten bilden würden, gepresst zu werden.

Analog dem Zwischenverbindungsteil kann auch wenigstens ein Kupplungseinrichtungsteil, typischerweise beide Kupplungseinrichtungsteile, in Umfangsrichtung segmentiert ausgebildet sein. Ein segmentiert und somit mehrteilig bzw. -stückig ausgebildetes Kupplungseinrichtungsteil kann mehrere in Umfangsrichtung zu dem Kupplungseinrichtungsteil verbindbare, jeweils wenigstens einen Grundabschnitt umfassende Kupplungseinrichtungsteilsegmente umfassen. Jedes Kupplungseinrichtungsteilsegment umfasst damit wenigstens einen Grundabschnitt. Jedes Kupplungseinrichtungsteilsegment erstreckt sich in Umfangsrichtung um einen Anteil der umfangsrichtungsmäßigen Gesamterstreckung des jeweiligen Kupplungseinrichtungsteils.

Auch jeweilige Kupplungseinrichtungsteilsegmente können, insbesondere im Bereich ihrer im Betriebs- bzw. Montagezustand der Vorrichtung in Umfangsrichtung benachbart angeordneten Grundabschnittbereiche, mit Verbindungselementen ausgebildet sein, welche zur, insbesondere (beschädigungs- bzw. zerstörungsfrei) lösbaren Verbindung unmittelbar benachbart angeordneter Kupplungseinrichtungsteilsegmente in Umfangsrichtung ausgebildet sind. Jeweilige Verbindungselemente können als Formschlusselemente, d. h. z. B. als Steckelemente, Rast-/Schnappelemente, etc., ausgebildet sein, welche unter Ausbildung einer formschlüssigen Verbindung jeweiliger benachbart angeordneter Kupplungseinrichtungsteilsegmente, insbesondere in Umfangsrichtung, zusammenwirken.

Wie erwähnt, umfasst ein Kupplungseinrichtungsteilsegment wenigstens einen Grundabschnitt. Für ein mehrere in Umfangsrichtung benachbart angeordnete Grundabschnitte umfassendes Kupplungseinrichtungsteilsegment gilt, dass mehrere in Umfangsrichtung unmittelbar benachbart angeordnete Grundabschnitte über wenigstens ein in Umfangsrichtung dehn- und/oder stauchbares, insbesondere faltenartiges, Strukturelement miteinander verbunden sein können. Durch die Ausbildung oder Anordnung entsprechender Strukturelemente zwischen in Umfangsrichtung unmittelbar benachbart angeordneten Grundabschnitten eines jeweiligen Kupplungseinrichtungsteilsegments weist das Kupplungseinrichtungsteilsegment in Umfangsrichtung dehn- und/oder stauchbare Eigenschaften auf. Die Strukturelemente sind typischerweise derart beschaffen, dass diese raumgebend eine umfangsrichtungsmäßige Dehnung und/oder Stauchung eines jeweiligen Kupplungseinrichtungsteilsegments ermöglichen. Ein aus mehreren entsprechenden Kupplungseinrichtungsteilsegmenten gebildetes Kupplungseinrichtungsteil lässt sich im Betriebs- bzw. Montagezustand der Vorrichtung sonach in Umfangsrichtung dehnen bzw. stauchen, was für die erwähnte vermittels der Vorrichtung mögliche Verbindung von Rohrelementen jedweder Art vorteilhaft ist.

Ein Strukturelement kann z. B. durch mehrere winklig, insbesondere V-förmig, zueinander ausgerichtete Strukturelementabschnitte ausgebildet sein. Durch entsprechende Strukturelementabschnitte können (weitgehend) axial verlaufende Schlitzstrukturen gebildet sein. In allen Fällen geben entsprechende Schlitzstrukturen ausreichend Raum für eine entsprechende Dehnung- bzw. Stauchung jeweiliger Kupplungseinrichtungsteilsegmente bzw. des Kupplungseinrichtungsteils in Umfangsrichtung.

Entsprechende Strukturelementabschnitte können derart beabstandet sein, dass diese in bestimmten Betriebs- bzw. Montagezuständen der Vorrichtung im Bereich des Innenumfangs der Vorrichtung in Umfangsrichtung (im Wesentlichen) unmittelbar aneinander anliegen. Der Innenumfang des jeweiligen Kupplungseinrichtungsteils kann im Betriebs- bzw. Montagezustand der Vorrichtung sonach (im Wesentlichen) geschlossen sein. Einem gegebenenfalls vorhandenen, zwischen die Kupplungseinrichtung und die zu verbindenden Rohrelemente geschalteten, insbesondere hohlzylindrischen, Dichtelement ist damit keine Möglichkeit gegeben, in radialer Richtung in Spalträume, welche sich z. B. zwischen in Umfangsrichtung unmittelbar benachbart angeordneten Strukturelementabschnitten bilden würden, gepresst zu werden.

Weitere Vorteile und Einzelheiten der Erfindung ergeben sich aus den im Folgenden beschriebenen Ausführungsbeispielen sowie anhand der Zeichnungen. Dabei zeigt:
- Fig. 1 - 6: je eine ausschnittsweise Darstellung einer Vorrichtung zum Verbinden zweier Rohrelemente gemäß einem Ausführungsbeispiel;
- Fig. 7 - 9: je eine Darstellung eines Kupplungseinrichtungsteilsegments einer Vorrichtung zum Verbinden zweier Rohrelemente gemäß einem Ausführungsbeispiel;
- Fig. 10 - 12: je eine Darstellung eines Zwischenverbindungsteilsegments einer Vorrichtung zum Verbinden zweier Rohrelemente gemäß einem Ausführungsbeispiel;
- Fig. 13: eine ausschnittsweise Darstellung eines Kupplungseinrichtungsteilsegments einer Vorrichtung zum Verbinden zweier Rohrelemente gemäß einem weiteren Ausführungsbeispiel; und
- Fig. 14 - 17: jeweils ausschnittsweise Darstellungen eines Kupplungseinrichtungsteils und eines Zwischenverbindungsteils gemäß weiteren Ausführungsbeispielen.

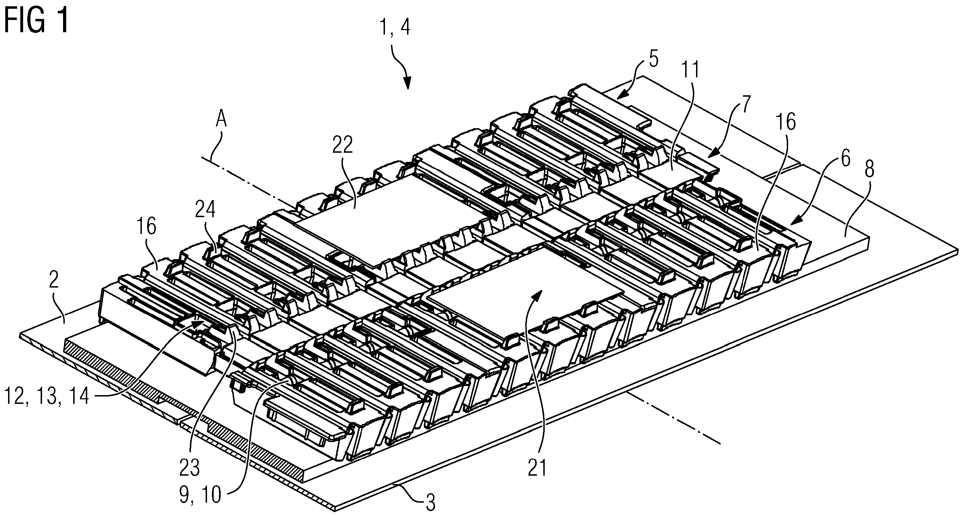

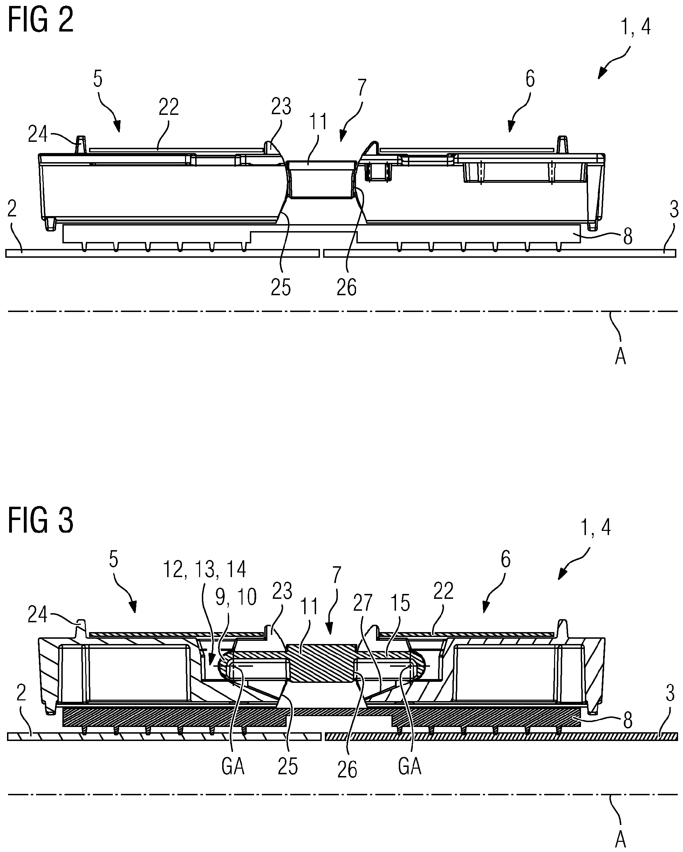

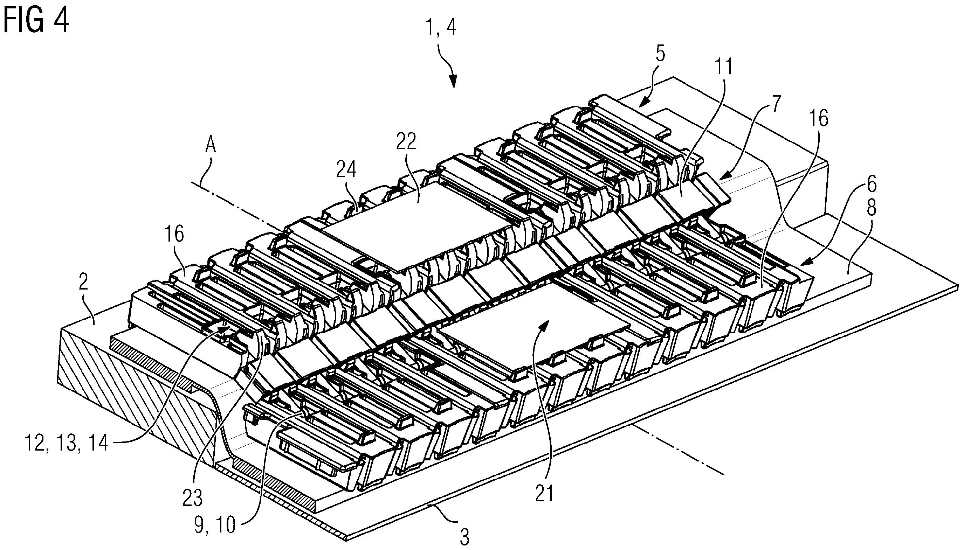

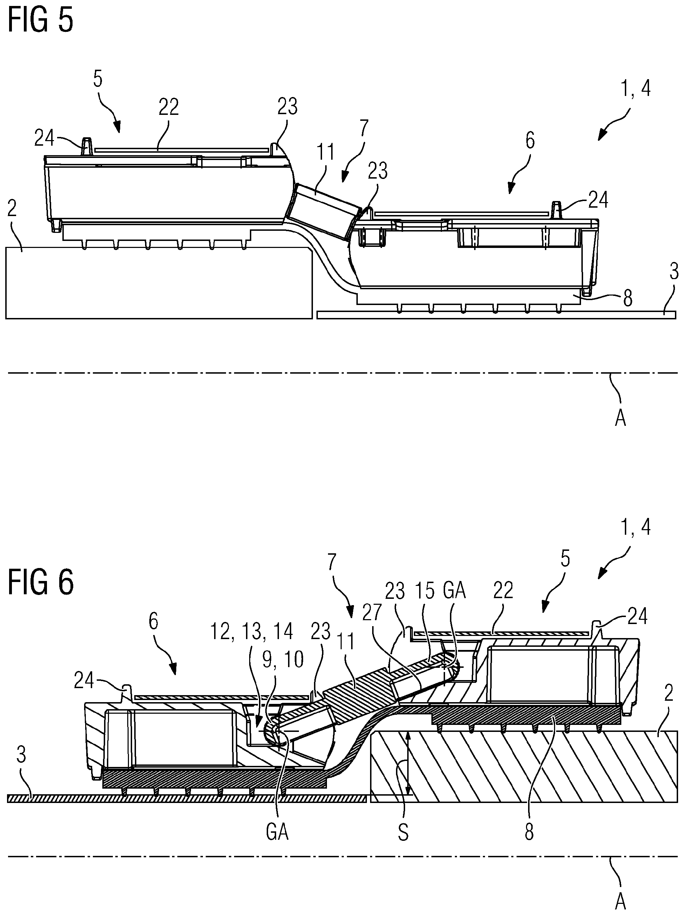

Die Fig. 1 - 6 zeigen je eine ausschnittsweise Darstellung einer Vorrichtung 1 zum Verbinden zweier Rohrelemente 2, 3 gemäß einem Ausführungsbeispiel. Die Vorrichtung 1 ist in den Fig. 1, 4 jeweils ausschnittsweise in einer perspektivischen Ansicht, in den Fig. 2, 5 jeweils in einer Ansicht (Seitenansicht) auf die umfangsrichtungsmäßigen freien Enden der in den Fig. 1, 4 ausschnittsweise gezeigten Vorrichtung 1 und in den Fig. 3, 6 jeweils in einer quergeschnittenen Ansicht der in den Fig. 2, 5 gezeigten Ansichten dargestellt.

Im Betriebs- bzw. Montagezustand der Vorrichtung 1 weist diese in an sich bekannter Weise selbstverständlich eine hohlzylinderartige bzw. hohlzylindrische Gestalt auf. Die Symmetrie- bzw. Zentralachse der Vorrichtung 1 ist in den Fig. mit "A" gekennzeichnet.

Die zu verbindenden bzw. verbundenen Rohrelemente 2, 3 sind mit jeweiligen jeweilige Stirnflächen bzw. -seiten bildenden Abschnitten einander gegenüber liegend, insbesondere auf Stoß, angeordnet.

Die Vorrichtung 1 dient zum axialen Verbinden zweier Rohrelemente 2, 3. Wenngleich sich mit der Vorrichtung 1 Rohrelemente 2, 3 (im Wesentlichen) gleicher Konfiguration, d. h. insbesondere gleichen Außendurchmessers, stabil verbinden lassen, ist die Vorrichtung 1, wie sich aus den Fig. 1 - 6 ergibt, eingerichtet, Rohrelemente 2, 3, deutlich unterschiedlicher Konfiguration, d. h. insbesondere weit außerhalb eines, z. B. fertigungsbedingten, Toleranzbereichs liegender Außendurchmesser, stabil zu verbinden. Vermittels der Vorrichtung 1 lassen sich sonach erhebliche radiale Stufen (vgl. Doppelpfeil S in Fig. 6), insbesondere bis zu 100 mm oder mehr, zwischen jeweiligen zu verbindenden Rohrelementen 2, 3 überbrücken. Anhand der Fig. 1 - 6 ist ersichtlich, dass die Verbindung der Rohrelemente 2, 3 koaxial bzw. zentrisch, d. h. die Symmetrie- bzw. Zentralachsen der Rohrelemente 2, 3 liegen (im Wesentlichen) in einer gemeinsamen Symmetrie- bzw. Zentralachse A der Vorrichtung 1 ist.

Die Vorrichtung 1 umfasst als zentrale Funktionseinheit eine Kupplungseinrichtung 4. Die Kupplungseinrichtung 4 umfasst ein erstes hohlzylindrisches Kupplungseinrichtungsteil 5, ein zweites hohlzylindrisches Kupplungseinrichtungsteil 6 und ein ringartiges Zwischenverbindungsteil 7. Das erste Kupplungseinrichtungsteil 5 ist einem ersten Rohrelement 2 zuordenbar bzw. zugeordnet. Das zweite Kupplungseinrichtungsteil 6 ist dem mit dem ersten Rohrelement 2 verbundenen zweiten Rohrelement 3 zuordenbar bzw. zugeordnet. Das Zwischenverbindungsteil 7 ist zwischen den beiden Kupplungseinrichtungsteilen 5, 6 angeordnet; mithin sind die beiden Kupplungseinrichtungsteile 5, 6 axial über das Zwischenverbindungsteil 7 miteinander verbunden. Die Kupplungseinrichtungsteile 5, 6 und das Zwischenverbindungsteil 7 sind hierfür jeweils mit geeigneten mechanischen Schnittstellen ausgestattet, welche eine entsprechende axiale Verbindung dieser ermöglichen.

Die Kupplungseinrichtungsteile 5, 6 stellen (im Wesentlichen) diejenigen Funktionskomponenten der Vorrichtung 1 dar, welche die miteinander zu verbindenden Rohrelemente 2, 3 außenumfangsseitig umgreifen; das erste Kupplungseinrichtungsteil 5 umgreift das diesem zugeordnete erste Rohrelement 5 im Bereich dessen Außenumfangs, das zweite Kupplungseinrichtungsteil 6 umgreift das diesem zugeordnete zweite Rohrelement 3 im Bereich dessen Außenumfangs. Jeweilige Kupplungseinrichtungsteile 5, 6 bilden sonach zylindrische Anlagebereiche für jeweilige Rohrelemente 2, 3; dies gilt auch, wenn zwischen die Kupplungseinrichtungsteile 5, 6 und die Rohrelemente 2, 3 ein optionales, insbesondere hohlzylindrisches, Dichtelement 8 geschaltet ist.

Wie anhand der Fig. 4 - 6 ersichtlich ist, lässt sich das Zwischenverbindungsteil 7 im Betriebs- bzw. Montagezustand der Vorrichtung 1 in eine konusartige bzw. -förmige Grundform bringen. Die Fig. 4 - 6 zeigen, dass das Zwischenverbindungsteil 7 insbesondere bei der bei einem axialen Verbinden zweier Rohrelemente 2, 3 (deutlich) ungleichen Außendurchmessers erforderlichen Überbrückung einer radialen Stufe in eine entsprechende konusartige bzw. -förmige Grundform gebracht wird.

In den in den Fig. gezeigten Ausführungsbeispielen sind an dem ersten Kupplungseinrichtungsteil 5 und an dem zweiten Kupplungseinrichtungsteil, d. h. insbesondere im Bereich deren jeweiliger freier axialer Enden, ein zweites Gelenkelement 12 ausgebildet. Ein jeweiliges zweites Gelenkelement 12 ist als ein einen Aufnahmebereich 13 zur zumindest abschnittsweisen Aufnahme eines Eingriffselements 10 eines ersten Gelenkelements 9 umfassendes Aufnahmeelement 14 ausgebildet. An dem Zwischenverbindungsteil 7, d. h. insbesondere im Bereich dessen jeweiliger freier axialer Enden, sind erste Gelenkelemente 9 ausgebildet. Ein jeweiliges erstes Gelenkelement 9 ist als Eingriffselement 10 zum Eingriff in einen Aufnahmebereich 13 eines zweiten Gelenkelements 12 ausgebildet.

Ein ein erstes Gelenkelement 9 bildendes Eingriffselement 10 ist in den in den Fig. gezeigten Ausführungsbeispielen konkret als ein eine Gelenkachse GA definierender, insbesondere zylinderartiger, Gelenkzapfen ausgebildet, ein ein zweites Gelenkelement 13 bildendes Aufnahmeelement 14 ist in den in den Fig. gezeigten Ausführungsbeispielen konkret als eine Gelenkzapfenaufnahme ausgebildet. Ein jeweiliges erstes Gelenkelement 9 lässt sich sonach in einem zweiten Gelenkelement 13 aufnehmen. Jeweilige erste und zweite Gelenkelemente 9, 13 sind damit eingerichtet, im Sinne von miteinander verbindbaren Verbindungspartnern zusammenzuwirken. Das Zusammenwirken erster und zweiter Gelenkelemente 9, 13 resultiert sonach in einer axialen Kopplung bzw. Verbindung jeweiliger Gelenkelemente 9, 13 bzw. der diesen zugehörigen Funktionskomponenten der Kupplungseinrichtung 4.

Die Kupplungseinrichtungsteile 5, 6 und das Zwischenverbindungsteil 7 sind über die an diesen ausgebildeten ersten bzw. zweiten Gelenkelemente 9, 13 derart konfiguriert, dass sich die erwähnte axiale Verbindung der Kupplungseinrichtungsteile 5, 6 unter Zwischenschaltung des Zwischenverbindungsteils 7 ausbilden lässt (vgl. insbesondere Fig. 1 - 6). Ein jeweiliges kupplungseinrichtungsteilseitiges zweites Gelenkelement 13 korrespondiert sonach mit einem jeweiligen zwischenverbindungsteilseitigen ersten Gelenkelement 9. Grundsätzlich ergeben sich mit der Maßgabe, dass sich die Kupplungseinrichtungsteile 5, 6 unter Zwischenschaltung des Zwischenverbindungsteils 7 axial miteinander koppeln bzw. verbinden lassen, beliebige Konfigurationsmöglichkeiten jeweiliger erster und zweiter Gelenkelemente 9, 13.

Insbesondere anhand der Fig. 3, 6 ist ersichtlich, dass die an den Kupplungseinrichtungsteilen 5, 6 ausgebildeten zweiten Gelenkelemente 13 eingerichtet sind, mit den an dem Zwischenverbindungsteil 7 ausgebildeten ersten Gelenkelementen 9, insbesondere formschlüssig, unter Ausbildung einer Gelenkverbindung, d. h. einer Drehgelenkverbindung, zwischen dem jeweiligen Kupplungseinrichtungsteil 5, 6 und dem Zwischenverbindungsteil 7 zusammenzuwirken.

Die Ausbildung einer Gelenkverbindung zwischen dem ersten Kupplungseinrichtungsteil 5 und dem Zwischenverbindungsteil 7 sowie zwischen dem zweiten Kupplungseinrichtungsteil 6 und dem Zwischenverbindungsteil 7 resultiert in einer deutlich verbesserten Vorrichtung 1. Die Gelenkverbindung stellt eine Möglichkeit dar, Rohrelemente 2, 3 (deutlich) unterschiedlichen Außendurchmessers ohne Materialdeformation der Vorrichtung 1 in dem typischerweise durch einen Stoßbereich jeweiliger zu verbindender Rohrelemente 2, 3 gebildeten Überbrückungsbereich zu ermöglichen. Die Gelenkverbindung ermöglicht eine stufenlose gelenkige Auslenkung bzw. Auswinkelung der Kupplungseinrichtungsteile 5, 6 relativ zu dem Zwischenverbindungsteil 7 und umgekehrt; der hierfür erforderliche Kraftaufwand geht gegen "Null". Die Gelenkverbindung ermöglicht dabei - neben einer Aufnahme von axial wirkenden Normalkräften - eine ausgesprochen hohe Aufnahme von radial wirkenden Quer- bzw. Scherkräften, sodass im Betriebs- bzw. Montagezustand der Vorrichtung 1 quer- bzw. scherkraftbedingte radiale Relativbewegungen der zu verbindenden Rohrelemente 2, 3 (nahezu) ausgeschlossen sind; die erwähnte Koaxialität einer durch die Vorrichtung 1 hergestellten Verbindung der Rohrelemente 2, 3 kann damit auch bei einem Verbinden von Rohrelementen 2, 3 (deutlich) ungleichen Außendurchmessers bzw. der hierfür erforderlichen Überbrückung (erheblicher) radialer Stufen gewährleistet werden. Die Vorrichtung 1 ermöglicht es damit, (nahezu) jedwede Rohrelementkombination gleichen oder ungleichen Außendurchmessers stabil miteinander zu verbinden.

Die durch Zusammenwirken der an den Kupplungseinrichtungsteilen 5, 6 ausgebildeten zweiten Gelenkelemente 13 mit den an dem Zwischenverbindungsteil 7 ausgebildeten ersten Gelenkelementen 9 ausgebildete Gelenkverbindung ermöglicht, wie erwähnt, ein stufenloses Verschwenken des Zwischenverbindungsteils 7 in mehrere, d. h. insbesondere nahezu beliebige, Schwenkstellungen relativ zu dem ersten und/oder zweiten Kupplungseinrichtungsteil 5, 6. Das Zwischenverbindungsteil 7 kann z. B. in einem Winkelbereich zwischen 0 und ± 180° bezüglich der Zentralachse A der Vorrichtung 1, bevorzugt in einem Winkelbereich zwischen 0 und ±90° bezüglich der Zentralachse A der Vorrichtung 1, relativ zu den Kupplungseinrichtungsteilen 5, 6 verschwenkt werden. Das Zwischenverbindungsteil 7 ist in den Fig. 4 - 6 jeweils in einer relativ zu den Kupplungseinrichtungsteilen 5, 6 verschwenkten Schwenkstellung gezeigt.

Die Gelenkverbindung des ersten Kupplungseinrichtungsteils 5 mit dem Zwischenverbindungsteil 7 wie auch die Gelenkverbindung des zweiten Kupplungseinrichtungsteils 6 mit dem Zwischenverbindungsteil 7 ist im Betriebs- bzw. Montagezustand der Vorrichtung 1 kann in allen Schwenkstellungen des Zwischenverbindungsteils 7 relativ zu den Kupplungseinrichtungsteilen 5, 6 unverlierbar bzw. nicht lösbar sein. Die Gelenkverbindung kann sonach derart ausgebildet sein, dass im Betriebs- bzw. Montagezustand der Vorrichtung 1, insbesondere in bestimmten Schwenkstellungen, in welchen das Zwischenverbindungsteil 7 durch entsprechende Verschwenkung stark relativ zu den Kupplungseinrichtungsteilen 5, 6 ausgewinkelt bzw. verschwenkt ist, ein Lösen der Gelenkverbindung, z. B. durch eine Bewegung eines in einem Aufnahmeelement 14 aufgenommenen Eingriffselements 13 aus dem Aufnahmeelement 14, nicht möglich ist.

Wie erwähnt und in den Fig. 4 - 6 gezeigt, lässt sich das Zwischenverbindungsteil 7 im Zusammenhang mit der bei einem axialen Verbinden zweier Rohrelemente 2, 3 (deutlich) ungleichen Außendurchmessers erforderlichen Überbrückung einer radialen Stufe in eine entsprechende konusartige bzw. -förmige Grundform bringen. Die Ausbildung der konusartigen Grundform des Zwischenverbindungsteils 7 ist im Betriebs- bzw. Montagezustand der Vorrichtung 1 durch eine entsprechende Verschwenkung des Zwischenverbindungsteils 7 relativ zu den Kupplungseinrichtungsteilen 5, 6 realisiert. Die Vorrichtung 1 ist sonach durch ein Verschwenken des Zwischenverbindungsteils 7 relativ zu den Kupplungseinrichtungsteilen 5, 6 mit einem sich in axialer Richtung zwischen dem ersten und dem zweiten Kupplungseinrichtungsteil 5, 6 erstreckenden, konusartig bzw. - förmig verlaufenden Mittelbereich ausbildbar bzw. ausgebildet.

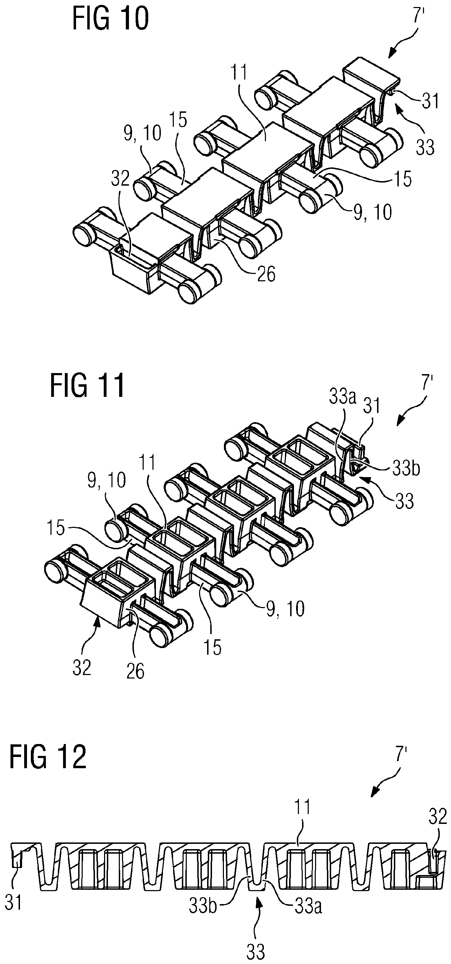

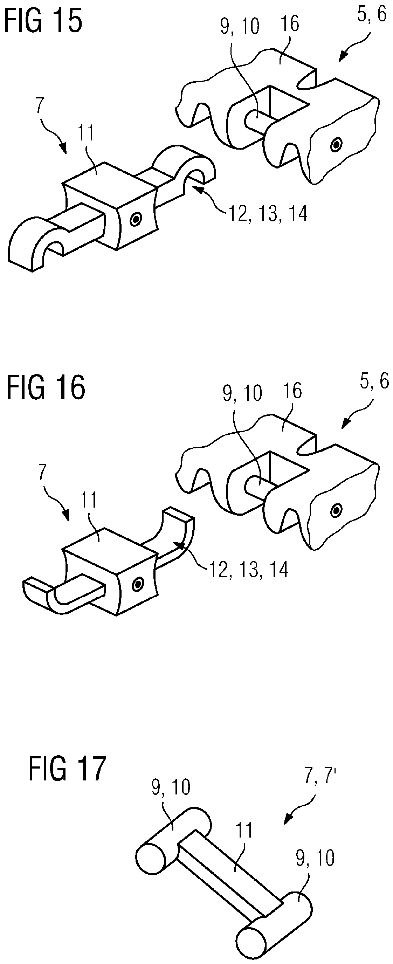

Aus den Fig. 1 - 6 ist ersichtlich, dass das Zwischenverbindungsteil 7 mehrere, insbesondere quaderartige bzw. -förmige, in Umfangsrichtung benachbart angeordnete und im Betriebs- bzw. Montagezustand der Vorrichtung 1 (im Wesentlichen) in axialer Richtung ausgerichtete Grundabschnitte 11 umfasst. Jeweilige an dem Zwischenverbindungsteil 7 ausgebildete erste Gelenkelemente 9 sind in dem Ausführungsbeispiel beispielhaft an einem, insbesondere in axialer Richtung, stegartig von dem Grundabschnitt 11 abragenden Ansatz 15 ausgebildet (vgl. hierzu auch Fig. 10, 11). Alternativ denkbar wäre z. B. auch eine unmittelbare Ausbildung von ersten Gelenkelementen 9 an einem stegartigen Grundabschnitt 11 (vgl. Fig. 17), sodass das Zwischenverbindungsteil 7 eine knochen- oder Doppel-T-Träger-artige geometrische Gestalt aufweisen kann.

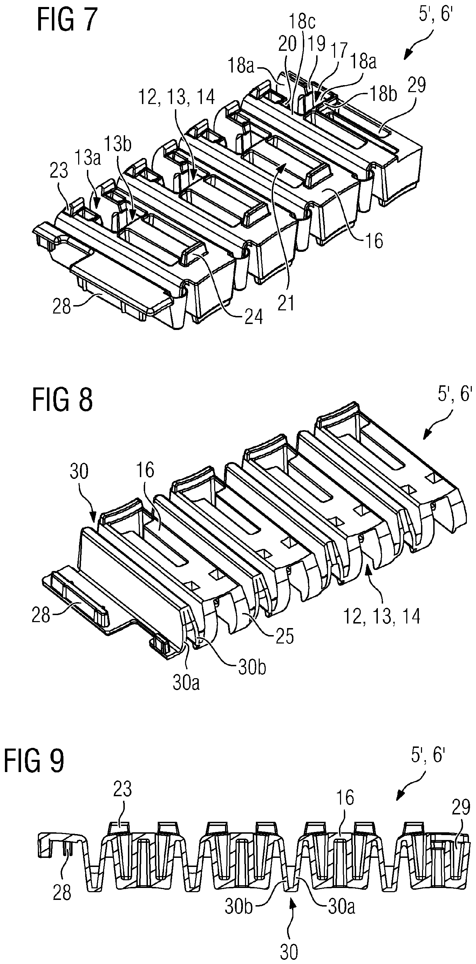

Aus den Fig. 1 - 6 wie auch aus den Fig. 7 - 9 ist weiter ersichtlich, dass auch das erste und das zweite Kupplungseinrichtungsteil 5, 6 mehrere, insbesondere quaderartige bzw. - förmige, in Umfangsrichtung benachbart angeordnete und im Betriebs- bzw. Montagezustand der Vorrichtung 1 (im Wesentlichen) in axialer Richtung ausgerichtete Grundabschnitte 16 umfasst. Die an den Kupplungseinrichtungsteilen 5, 6 ausgebildeten zweiten Gelenkelemente 12 sind durch jeweilige einen jeweiligen Aufnahmebereich 13 bildende Ausnehmungen 17 in den Grundabschnitten 16 ausgebildet.

Die Ausnehmungen 17 in den Grundabschnitten 16 der Kupplungseinrichtungsteile 5, 6 sind durch mehrere die Ausnehmungen 17 definierende Wandungselemente 18a - 18c der jeweiligen Grundabschnitte 16 gebildet. Die Wandungselemente 18a, 18c bilden eine axiale Auszugssicherung für ein in den Aufnahmebereich 13 eingreifendes Eingriffselement 10 eines ersten Gelenkelements 9, welche im Betriebs- bzw. Montagezustand der Vorrichtung 1 eine axiale Bewegung des eingreifenden ersten Gelenkelements 9 in Richtung des axial gegenüber liegenden Kupplungseinrichtungsteils 5, 6 verhindert. Die die axiale Auszugssicherung bildenden Wandungselemente 18a, 18c können ein in den Aufnahmebereich 13 eingreifendes Eingriffselement 10 eines ersten Gelenkelements 9 abschnittsweise, insbesondere formschlüssig, um- bzw. übergreifen.

Die die Ausnehmungen 17 in den Grundabschnitten 16 der Kupplungseinrichtungsteile 5, 6 definierenden Wandungen 18a, 18c bilden ferner eine radiale Auszugssicherung für ein in den Aufnahmebereich 13 eingreifendes Eingriffselement 10 eines ersten Gelenkelements 9, welche im Betriebs- bzw. Montagezustand der Vorrichtung 1 eine radiale Bewegung des eingreifenden ersten Gelenkelements 9 relativ zu dem jeweiligen Kupplungseinrichtungsteil 5, 6 verhindert. Die die radiale Auszugssicherung bildenden Wandungselemente 18a, 18c können ein in den Aufnahmebereich 13 eingreifendes Eingriffselement 10 eines ersten Gelenkelements 9 abschnittsweise, insbesondere formschlüssig, um- bzw. übergreifen. Hierfür sind die Wandungselemente 18a, 18c mit, z. B. klauenartigen, Wandungselementabschnitten 19, 20 ausgebildet.

Anhand der Fig. 7 - 9 ist ersichtlich, dass die Ausnehmungen 17 in den jeweiligen Grundabschnitt 16 der Kupplungseinrichtungsteile 5, 6 in radialer Richtung bezüglich der Zentralachse A der Vorrichtung 1, d. h. in radialer Richtung nach außen, offen sind. Derart ist eine einfache Montage und Demontage der Vorrichtung 1 ermöglicht, indem jeweilige Eingriffselemente 10 erster Gelenkelemente 9 für eine Montage der Vorrichtung 1 in radialer Richtung in jeweiligen Ausnehmungen 17 angeordnet werden und jeweilige in jeweiligen Ausnehmungen 17 angeordnete Eingriffselemente 10 erster Gelenkelemente 9 für eine Demontage der Vorrichtung 1 in radialer Richtung aus jeweiligen Ausnehmungen 17 entfernt werden.

Anhand der Fig. 1 - 6 ist ersichtlich, dass die Ausnehmungen 17 jeweiliger Grundabschnitte 16 im Betriebs- bzw. Montagezustand der Vorrichtung 1 verschlossen sind, sodass in diesen angeordnete Eingriffselemente 10 nicht aus diesen entfernt werden können. Jeweilige in radialer Richtung bezüglich der Zentralachse A der Vorrichtung 1 offene Ausnehmungen 17 in jeweiligen Grundabschnitten 16 der Kupplungseinrichtungsteile 16 münden in einen sich in Umfangsrichtung um die jeweiligen Kupplungseinrichtungsteile erstreckenden, wie sich aus den Fig. 2, 3 bzw. 5, 6 ergibt, durch jeweilige radiale Vorsprünge 23, 24 definierten Aufnahmekanal 21 zur Aufnahme eines das jeweilige Kupplungseinrichtungsteil 5, 6 in Umfangsrichtung umspannenden, insbesondere band-, manschetten- oder schellenartigen, Spannelements 22. Die Ausnehmungen 17 sind sonach in radialer Richtung durch ein in dem Aufnahmekanal 21 aufgenommenes Spannelement 22 verschließbar, insbesondere derart, dass ein in dem Aufnahmebereich 13 aufgenommenes Eingriffselement 10 in radialer Richtung nicht aus der Ausnehmung 17 bzw. dem Aufnahmebereich 13 bewegbar ist (vgl. Fig. 5, 6).

Für die in den Fig. beispielhaft gezeigte Konfiguration der Kupplungseinrichtung 4 mit an den Kupplungseinrichtungsteilen 5, 6 ausgebildeten zweiten Gelenkelementen 12 und an dem Zwischenverbindungsteil 7 ausgebildeten ersten Gelenkelementen 9 gilt, dass ein jeweiliger Aufnahmebereich 13 eines zweiten Gelenkelements 12 einen ersten Aufnahmebereichsabschnitt 13a, welcher im Betriebs- bzw. Montagezustand der Vorrichtung 1 den von einem Grundabschnitt 11 des Zwischenverbindungsteils 7 stegartig abragenden Ansatz 15 aufnimmt und einen mit dem ersten Aufnahmebereichsabschnitt 13a kommunizierenden zweiten Aufnahmebereichsabschnitt 13b, welcher im Betriebs- bzw. Montagezustand der Vorrichtung 1 das an dem jeweiligen stegartigen Ansatz 15 ausgebildete erste Gelenkelement 9 aufnimmt, umfasst.

Aus den Fig. 7 - 12 ergibt sich weiter, dass die Grundabschnitte 16 der Kupplungseinrichtungsteile 5, 6 im Bereich ihrer im Betriebs- bzw. Montagezustand der Vorrichtung 1 dem Zwischenverbindungsteil 7 in axialer Richtung zugewandten freien Enden jeweils mit einer, insbesondere gewölbt verlaufenden, Führungsfläche 25 ausgebildet sind. Die Grundabschnitte 11 des Zwischenverbindungsteils 7 sind im Bereich ihrer im Betriebs- bzw. Montagezustand der Vorrichtung 1 den Kupplungseinrichtungsteilen 5, 6 in axialer Richtung zugewandten freien Enden mit beispielsweise korrespondierenden, insbesondere gegengleich gewölbt verlaufenden, Gegenführungsflächen 26 ausgebildet. Die Führungs- und Gegenführungsflächen 25, 26 dienen einerseits dazu, geführte Relativbewegungen des Zwischenverbindungsteils 7 zu den Kupplungseinrichtungsteilen 5, 6 zu ermöglichen. Die zwischenverbindungsteilseitigen Gegenführungsflächen 26 sind (bei Schwenkbewegungen des Zwischenverbindungsteils 7 relativ zu den Kupplungseinrichtungsteilen 5, 6) relativ zu den Kupplungseinrichtungsteilen 5, 6 entlang jeweiliger kupplungseinrichtungsteilseitiger Führungsflächen 25 bewegbar. Andererseits dienen die einander in axialer Richtung zugewandten Führungs- und Gegenführungsflächen 25, 26 dazu, gegebenenfalls im Betrieb der Vorrichtung 1 auftretende in axialer Richtung wirkende Kräfte aufzunehmen. Die Führungs- bzw. Gegenführungsflächen 25, 26 können insoweit auch als axiale Anschlag- bzw. Gegenanschlagflächen bezeichnet bzw. erachtet werden, welche zur Aufnahme von in axialer Richtung wirkenden Kräften eingerichtet sind.

Anhand der Fig. 3, 6 ist ersichtlich, dass ein jeweiliger kupplungseinrichtungsteilseitiger Grundabschnitt 16 mit einer eine Gelenkendstellung des Zwischenverbindungsteils 7 relativ dem jeweiligen Kupplungseinrichtungsteil 5, 6 definierenden radialen Anschlagfläche 27 ausgebildet ist. Durch die Definition entsprechender Gelenkendstellungen kann die Stabilität der Vorrichtung 1 weiter erhöht werden, da eine Auswinkelung bzw. Verschwenkung des Zwischenverbindungsteils 7 relativ zu den Kupplungseinrichtungsteilen 5, 6 nur in definiertem Maße möglich ist. Jeweilige radiale Anschlagflächen 27 sind als in axialer Richtung mit einem bestimmten Neigungswinkel bezüglich der Zentralachse A der Vorrichtung 1 rampenartig verlaufende Rampenflächen ausgebildet. Durch den Neigungswinkel der jeweiligen Rampenflächen ist der jeweilige Winkel der Gelenkendstellung des Zwischenverbindungsteils 7 relativ zu dem jeweiligen Kupplungseinrichtungsteil 5, 6 definiert.

Aus den Fig. 7 - 12 ergibt sich, dass die Kupplungseinrichtungsteile 5, 6 als auch das Zwischenverbindungsteil 7 jeweils in Umfangsrichtung segmentiert ausgebildet sein können. Die Kupplungseinrichtungsteile 5, 6 sind sonach durch mehrere in Umfangsrichtung miteinander unter Ausbildung eines Kupplungseinrichtungsteils 5, 6 verbindbare bzw. verbundene Kupplungseinrichtungsteilsegmente 5', 6' gebildet, das Zwischenverbindungsteil 7 ist durch mehrere unter Ausbildung des Zwischenverbindungsteils 7 in Umfangsrichtung miteinander verbindbare bzw. verbundene Zwischenverbindungsteilsegmente 7' gebildet. Jedes Kupplungseinrichtungsteilsegment 5', 6' als auch jedes Zwischenverbindungsteilsegment 7' erstreckt sich in Umfangsrichtung um einen Anteil der umfangsrichtungsmäßigen Gesamterstreckung des jeweiligen Kupplungseinrichtungsteils 5, 6 bzw. des Zwischenverbindungsteils 7.

Ein Ausführungsbeispiel eines Kupplungseinrichtungsteilsegments 5', 6' -entsprechende Kupplungseinrichtungsteilsegmente 5', 6' sind typischerweise identisch ausgebildet - ist in den Fig. 7 bis 9 dargestellt. Das Kupplungseinrichtungsteilsegment 5', 6' ist in Fig. 7 in einer ersten perspektivischen Ansicht (Oberseite), in Fig. 8 in einer um 180° gedrehten zweiten perspektivischen Ansicht (Unterseite) und in Fig. 9 in einer längsgeschnittenen Ansicht dargestellt.

Das Kupplungseinrichtungsteilsegment 5', 6' ist im Bereich seiner im Betriebs- bzw. Montagezustand der Vorrichtung 1 in Umfangsrichtung benachbart angeordneten Grundabschnittbereiche mit Verbindungselementen 28, 29 ausgebildet, welche zur, insbesondere (beschädigungs- bzw. zerstörungsfrei) lösbaren Verbindung unmittelbar benachbart angeordneter Kupplungseinrichtungsteilsegmente 5', 6' in Umfangsrichtung ausgebildet sind. Jeweilige Verbindungselemente 28, 29 sind in dem Ausführungsbeispiel als Formschlusselemente, d. h. beispielhaft als Steckelemente, d. h. als beispielhaft radial ausgerichtete Steckabschnitte und zugehörige Steckaufnahmen, ausgebildet, welche unter Ausbildung einer formschlüssigen Verbindung jeweiliger benachbart angeordneter Kupplungseinrichtungsteilsegmente 5', 6', insbesondere in Umfangsrichtung, zusammenwirken.

Anhand der Fig. 7 - 9 ist ersichtlich, dass ein Kupplungseinrichtungsteilsegment 5', 6' mehrere Grundabschnitte 16 umfasst. Denkbar ist jedoch auch eine Konfiguration eines Kupplungseinrichtungsteilsegments 5', 6' mit nur einem (einzigen) Grundabschnitt 16. Für das in den Fig. 7 - 9 gezeigte, mehrere in Umfangsrichtung benachbart angeordnete Grundabschnitte 16 umfassende Kupplungseinrichtungsteilsegment 5', 6' gilt, dass die in Umfangsrichtung unmittelbar benachbart angeordneten Grundabschnitte 16 jeweils über ein in Umfangsrichtung dehn- und/oder stauchbares, insbesondere faltenartiges, Strukturelement 30 miteinander verbunden sind. Durch die Ausbildung oder Anordnung entsprechender Strukturelemente 30 zwischen in Umfangsrichtung unmittelbar benachbart angeordneten Grundabschnitten 16 weist das Kupplungseinrichtungsteilsegment 5', 6' in Umfangsrichtung dehn- und/oder stauchbare Eigenschaften auf. Die Strukturelemente 30 sind derart beschaffen, dass diese raumgebend eine umfangsrichtungsmäßige Dehnung und/oder Stauchung des Kupplungseinrichtungsteilsegments 5', 6' ermöglichen. Ein aus mehreren entsprechenden Kupplungseinrichtungsteilsegmenten 5', 6' gebildetes Kupplungseinrichtungsteil 5, 6 lässt sich im Betriebs- bzw. Montagezustand der Vorrichtung 1 sonach in Umfangsrichtung dehnen bzw. stauchen.

Anhand von Fig. 8 ist ersichtlich, dass ein Strukturelement 30 durch mehrere winklig, insbesondere V-förmig, zueinander ausgerichtete Strukturelementabschnitte 30a, 30b ausgebildet sein kann. Durch entsprechende Strukturelementabschnitte 30a, 30b sind axial verlaufende Schlitzstrukturen gebildet, welche ausreichend Raum für eine entsprechende Dehnung- bzw. Stauchung der Kupplungseinrichtungsteilsegmente 5', 6' bzw. des Kupplungseinrichtungsteils 5, 6 in Umfangsrichtung geben.

Ein Ausführungsbeispiel eines Zwischenverbindungsteilsegments 7' -entsprechende Zwischenverbindungsteilsegmente 7' sind typischerweise identisch ausgebildet - ist in den Fig. 10 bis 12 dargestellt. Das Zwischenverbindungsteilteilsegment 7' ist in Fig. 10 in einer ersten perspektivischen Ansicht (Oberseite), in Fig. 11 in einer um 180° gedrehten zweiten perspektivischen Ansicht (Unterseite) und in Fig. 12 in einer längsgeschnittenen Ansicht dargestellt.

Das Zwischenverbindungsteilsegment 7' ist im Bereich seiner im Betriebs- bzw. Montagezustand der Vorrichtung 1 in Umfangsrichtung benachbart angeordneten Grundabschnittbereiche mit Verbindungselementen 31, 32 ausgebildet, welche zur, insbesondere (beschädigungs- bzw. zerstörungsfrei) lösbaren Verbindung unmittelbar benachbart angeordneter Zwischenverbindungsteilsegmente 7' in Umfangsrichtung ausgebildet sind. Jeweilige Verbindungselemente 31, 32 sind in dem Ausführungsbeispiel als Formschlusselemente, d. h. beispielhaft als Steckelemente, d. h. als beispielhaft radial ausgerichtete Steckabschnitte und zugehörige Steckaufnahmen, ausgebildet, welche unter Ausbildung einer formschlüssigen Verbindung jeweiliger benachbart angeordneter Zwischenverbindungsteilsegmente 7', insbesondere in Umfangsrichtung, zusammenwirken.

Anhand der Fig. 10 - 12 ist ersichtlich, dass ein Zwischenverbindungsteilsegment 7' mehrere Grundabschnitte 11 umfasst. Denkbar ist jedoch auch eine Konfiguration eines Zwischenverbindungsteilsegments 7' mit nur einem (einzigen) Grundabschnitt 11. Für das in den Fig. 10 - 12 gezeigte, mehrere in Umfangsrichtung benachbart angeordnete Grundabschnitte 11 umfassende Zwischenverbindungsteilsegment 7' gilt, dass die in Umfangsrichtung unmittelbar benachbart angeordneten Grundabschnitte 11 jeweils über ein in Umfangsrichtung dehn- und/oder stauchbares, insbesondere faltenartiges, Strukturelement 33 miteinander verbunden sind. Durch die Ausbildung oder Anordnung entsprechender Strukturelemente 33 zwischen in Umfangsrichtung unmittelbar benachbart angeordneten Grundabschnitten 11 weist das Zwischenverbindungsteilsegment 7' in Umfangsrichtung dehn- und/oder stauchbare Eigenschaften auf. Die Strukturelemente 33 sind derart beschaffen, dass diese raumgebend eine umfangsrichtungsmäßige Dehnung und/oder Stauchung des Zwischenverbindungsteilsegments 7' ermöglichen. Das aus mehreren entsprechenden Zwischenverbindungsteilsegmenten 7' gebildete Zwischenverbindungsteil 7 lässt sich im Betriebs- bzw. Montagezustand der Vorrichtung 1 sonach in Umfangsrichtung dehnen bzw. stauchen.

Anhand von Fig. 11 ist ersichtlich, dass ein Strukturelement 33 durch mehrere winklig, insbesondere V-förmig, zueinander ausgerichtete Strukturelementabschnitte 33a, 33b ausgebildet sein kann. Durch entsprechende Strukturelementabschnitte 33a, 33b sind axial verlaufende Schlitzstrukturen gebildet, welche ausreichend Raum für eine entsprechende Dehnung- bzw. Stauchung des Zwischenverbindungsteilsegments 7' bzw. des Kupplungseinrichtungsteils 5, 6 in Umfangsrichtung geben.

Entsprechende Strukturelementabschnitte 33a, 33b sind derart beabstandet, dass diese im Betriebs- bzw. Montagezustand der Vorrichtung 1 im Bereich des Innenumfangs der Vorrichtung 1 in Umfangsrichtung (im Wesentlichen) unmittelbar aneinander anliegen. Der Innenumfang des Zwischenverbindungsteils 7 kann im Betriebs- bzw. Montagezustand der Vorrichtung 1 sonach (im Wesentlichen) geschlossen sein. Einem zwischen die Kupplungseinrichtung 4 und die zu verbindenden Rohrelemente 2, 3 geschalteten Dichtelement 8 ist damit keine Möglichkeit gegeben, in radiale Spalträume, welche sich z. B. zwischen in Umfangsrichtung unmittelbar benachbart angeordneten Strukturelementabschnitten 33a, 33b bilden würden, gepresst zu werden.

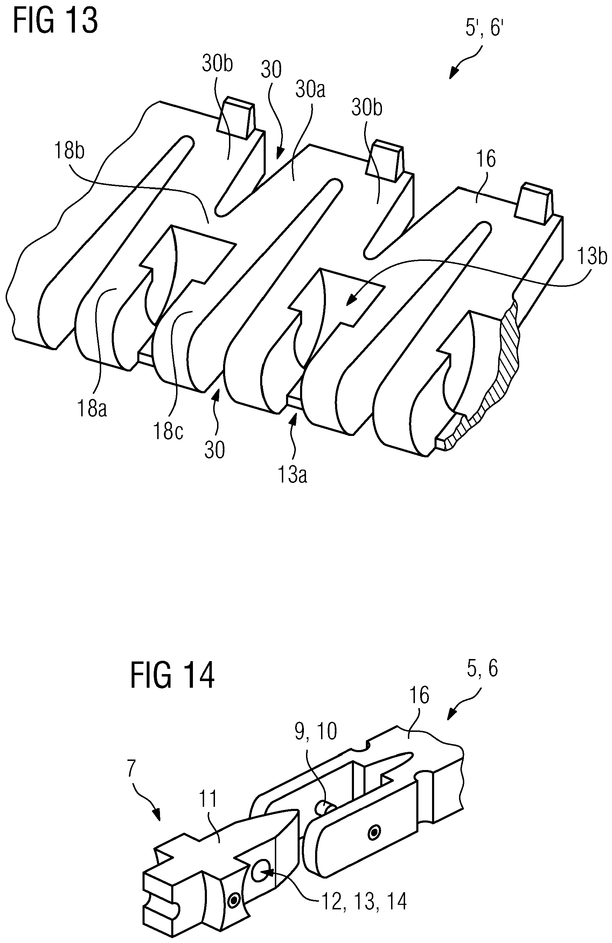

Fig. 13 zeigt eine ausschnittsweise Darstellung eines Kupplungseinrichtungsteilsegments 5', 6' gemäß einem weiteren Ausführungsbeispiel.

Anhand von Fig. 13 ist ersichtlich, dass jeweilige Strukturelemente 30 z. B. auch durch in axialer Richtung gabelartig bzw. förmig aus dem Grundabschnitt 16 abragende Strukturelementabschnitte 30a, 30b gebildet sein können. Die Anordnung und Ausrichtung der Strukturelementabschnitte 30a, 30b resultiert in in axialer Richtung geöffneten Schlitzstrukturen, welche ausreichend Raum für eine entsprechende Dehnung- bzw. Stauchung jeweiliger Kupplungseinrichtungsteilsegmente 5', 6' in Umfangsrichtung geben.

Die Fig. 14 - 17 zeigen jeweils ausschnittsweise Darstellungen eines Kupplungseinrichtungsteils 5, 6 bzw. eines Zwischenverbindungsteils 7 gemäß weiteren Ausführungsbeispielen.

Anhand der Fig. 14 - 16 sind weitere geometrisch-konstruktive Ausgestaltungen der ersten und zweiten Gelenkelemente 9, 12 ersichtlich, anhand der Fig. 17 ist eine weitere Ausgestaltung eines Zwischenverbindungsteils 7 bzw. Zwischenverbindungsteilsegments 7' ersichtlich.

In dem in Fig. 14 gezeigten Ausführungsbeispiel sind erste Gelenkelemente 9 in Form entsprechender Eingriffselemente 10 an einem kupplungseinrichtungsteilseitigen Grundabschnitt 16 ausgebildet. Bei den Eingriffselementen 10 handelt es sich um eine Gelenkachse GA definierende, insbesondere zylinderartige, Gelenkzapfen. Zweite Gelenkelemente 12 in Form entsprechender entsprechende Aufnahmebereiche 13 bildender Aufnahmeelemente 14 sind an einem zwischenverbindungsteilseitigen Grundabschnitt 11 ausgebildet.

Auch in dem in Fig. 15 gezeigten Ausführungsbeispiel sind erste Gelenkelemente 9 in Form entsprechender Eingriffselemente 10 an einem kupplungseinrichtungsteilseitigen Grundabschnitt 16 ausgebildet. Bei den Eingriffselementen 10 handelt es sich wiederum um eine Gelenkachse GA definierende, insbesondere zylinderartige, Gelenkzapfen. Zweite Gelenkelemente 12 in Form entsprechender entsprechende Aufnahmebereiche 13 bildender Aufnahmeelemente 14 sind an einem zwischenverbindungsteilseitigen Grundabschnitt 11 ausgebildet. Die zwischenverbindungsteilseitigen Aufnahmebereiche 13 sind eingerichtet, die kupplungseinrichtungsteilseitigen Eingriffselemente 10 abschnittsweise zu umgreifen; mithin sind die Eingriffselemente 10 im Betriebs- bzw. Montagezustand der Vorrichtung 1 abschnittsweise in den Aufnahmebereichen 13 aufgenommen.

Auch in dem in Fig. 16 gezeigten Ausführungsbeispiel sind erste Gelenkelemente 9 in Form entsprechender Eingriffselemente 10 an einem kupplungseinrichtungsteilseitigen Grundabschnitt 16 ausgebildet. Bei den Eingriffselementen 10 handelt es sich wiederum um eine Gelenkachse GA definierende, insbesondere zylinderartige, Gelenkzapfen. Zweite Gelenkelemente 12 in Form entsprechender entsprechende Aufnahmebereiche 13 bildender Aufnahmeelemente 14 sind an einem zwischenverbindungsteilseitigen Grundabschnitt 11 ausgebildet. Die zwischenverbindungsteilseitigen Aufnahmebereiche 13 sind wiederum eingerichtet, die die kupplungseinrichtungsteilseitigen Eingriffselemente 10 abschnittsweise zu umgreifen; mithin sind die Eingriffselemente 10 im Betriebs- bzw. Montagezustand der Vorrichtung 1 abschnittsweise in den Aufnahmebereichen 13 aufgenommen.

In dem in Fig. 17 gezeigten Ausführungsbeispiel weist der Grundabschnitt 11 des Zwischenverbindungsteils 7 bzw. des Zwischenverbindungsteilsegments 7'eine stegartige Grundform auf. Die ersten Gelenkelementen 9 sind unmittelbar an dem stegartigen Grundabschnitt 11 ausgebildet, sodass das Zwischenverbindungsteil 7 eine knochen- oder Doppel-T-Träger-artige geometrische Gestalt aufweist.

## Patentansprüche

1. Vorrichtung (1) zum axialen Verbinden zweier Rohrelemente (2, 3), insbesondere zweier Rohrelemente (2, 3) ungleichen Außendurchmessers, umfassend:
- eine Kupplungseinrichtung (4) mit einem einem ersten Rohrelement (2) zuordenbaren, im Montagezustand der Vorrichtung (1) eine zylinderartige Form aufweisenden ersten Kupplungseinrichtungsteil (5), einem einem mit dem ersten Rohrelement (2) axial zu verbindenden zweiten Rohrelement (3) zuordenbaren, im Montagezustand der Vorrichtung (1) eine zylinderartige Form aufweisenden zweiten Kupplungseinrichtungsteil (6) und einem zwischen den beiden Kupplungseinrichtungsteilen (5, 6) anordenbaren Zwischenverbindungsteil (7), wobei die beiden Kupplungseinrichtungsteile (5, 6) über das Zwischenverbindungsteil (7) axial miteinander verbindbar oder verbunden sind, **dadurch gekennzeichnet, dass**
- an dem ersten und an dem zweiten Kupplungseinrichtungsteil (5, 6) jeweils ein erstes Gelenkelement (9) ausgebildet ist, welches als Eingriffselement (10) zum Eingriff in einen Aufnahmebereich (13) eines zweiten Gelenkelements (12) ausgebildet ist, und/oder ein zweites Gelenkelement (12) ausgebildet ist, welches als ein einen Aufnahmebereich (13) zur zumindest abschnittsweisen Aufnahme eines Eingriffselements (10) eines ersten Gelenkelements (9) umfassendes Aufnahmeelement (14) ausgebildet ist,
- an dem Zwischenverbindungsteil (7) ein erstes Gelenkelement (9) ausgebildet ist, welches als Eingriffselement (10) zum Eingriff in einen Aufnahmebereich (13) eines zweiten Gelenkelements (12) ausgebildet ist, und/oder ein zweites Gelenkelement (12) ausgebildet ist, welches als ein einen Aufnahmebereich (13) zur zumindest abschnittsweisen Aufnahme eines Eingriffselements (10) eines ersten Gelenkelements (9) umfassendes Aufnahmeelement (14) ausgebildet ist,
- wobei ein an dem ersten oder zweiten Kupplungseinrichtungsteil (5, 6) ausgebildetes erstes Gelenkelement (9) eingerichtet ist, mit einem an dem Zwischenverbindungsteil (7) ausgebildeten zweiten Gelenkelement (12), insbesondere formschlüssig, unter Ausbildung einer Gelenkverbindung zwischen dem ersten oder zweiten Kupplungseinrichtungsteil (5, 6) und dem Zwischenverbindungsteil (7) zusammenzuwirken, oder
ein an dem ersten oder zweiten Kupplungseinrichtungsteil (5, 6) ausgebildetes zweites Gelenkelement (12) eingerichtet ist, mit einem an dem Zwischenverbindungsteil (7) ausgebildeten ersten Gelenkelement (9), insbesondere formschlüssig, unter Ausbildung einer Gelenkverbindung zwischen dem ersten oder zweiten Kupplungseinrichtungsteil (5, 6) und dem Zwischenverbindungsteil (7) zusammenzuwirken.

2. Vorrichtung nach Anspruch 1, **dadurch gekennzeichnet, dass** die durch Zusammenwirken eines an dem ersten oder zweiten Kupplungseinrichtungsteil (5, 6) ausgebildeten ersten Gelenkelements (9) mit einem an dem Zwischenverbindungsteil (7) ausgebildeten zweiten Gelenkelement (12) ausgebildete Gelenkverbindung oder die durch Zusammenwirken eines an dem ersten oder zweiten Kupplungseinrichtungsteil (5, 6) ausgebildeten zweiten Gelenkelements (12) mit einem an dem Zwischenverbindungsteil (7) ausgebildeten ersten Gelenkelement (9) ausgebildete Gelenkverbindung ein Verschwenken des Zwischenverbindungsteils (7) in mehrere Schwenkstellungen relativ zu dem ersten und/oder zweiten Kupplungseinrichtungsteil, insbesondere in einem Winkelbereich zwischen 0 und 180° bezüglich einer Zentralachse (A) der Vorrichtung (1), bevorzugt in einem Winkelbereich zwischen 0 und 90° bezüglich der Zentralachse (A) der Vorrichtung (1), ermöglicht.

3. Vorrichtung nach Anspruch 2, **dadurch gekennzeichnet, dass** die Gelenkverbindung des ersten Kupplungseinrichtungsteils (5) mit dem Zwischenverbindungsteil (7) und die Gelenkverbindung des zweiten Kupplungseinrichtungsteils (6) mit dem Zwischenverbindungsteil (7) in allen Schwenkstellungen des Zwischenverbindungsteils (7) relativ zu dem ersten und/oder zweiten Kupplungseinrichtungsteil (5, 6) nicht lösbar ist.

4. Vorrichtung nach einem der vorhergehenden Ansprüche, **dadurch gekennzeichnet, dass** das Zwischenverbindungsteil (7) wenigstens einen, insbesondere steg- oder quaderartigen, Grundabschnitt (11) umfasst, wobei ein an dem Zwischenverbindungsteil (7) ausgebildetes erstes Gelenkelement (9) an dem, insbesondere stegartigen, Grundabschnitt (11) oder an einem, insbesondere in axialer Richtung, stegartig von dem, insbesondere quaderartigen, Grundabschnitt (11) abragenden Ansatz (15) ausgebildet ist, und/oder ein an dem Zwischenverbindungsteil (7) ausgebildetes zweites Gelenkelement (12) durch eine einen Aufnahmebereich (13) bildende Ausnehmung in dem Grundabschnitt (11) ausgebildet ist.

5. Vorrichtung nach einem der vorhergehenden Ansprüche, **dadurch gekennzeichnet, dass** das erste und/oder zweite Kupplungseinrichtungsteil (5, 6) einen, insbesondere steg- oder quaderartigen, Grundabschnitt (16) umfasst, wobei ein an dem ersten und/oder zweiten Kupplungseinrichtungsteil (5, 6) ausgebildetes erstes Gelenkelement (9) an einem, insbesondere in axialer Richtung, stegartig von dem Grundabschnitt abragenden Ansatz ausgebildet ist, und/oder ein an dem ersten und/oder zweiten Kupplungseinrichtungsteil (5, 6) ausgebildetes zweites Gelenkelement (12) durch eine einen Aufnahmebereich (13) bildende Ausnehmung (17) in dem Grundabschnitt (16) ausgebildet ist.

6. Vorrichtung nach Anspruch 4 oder 5, **dadurch gekennzeichnet, dass** die Ausnehmung (17) durch wenigstens ein, insbesondere mehrere, die Ausnehmung definierendes Wandungselement (18a - 18c) gebildet ist, wobei das wenigstens eine oder wenigstens ein Wandungselement (18a - 18c) eine axiale Auszugssicherung für ein in den Aufnahmebereich (13) eingreifendes Eingriffselement (10) eines ersten Gelenkelements (9) bildet, welche im Montagezustand der Vorrichtung (1) eine axiale Bewegung des ersten Gelenkelements (9), insbesondere in Richtung des axial gegenüber liegenden Kupplungseinrichtungsteils (5, 6), verhindert.

7. Vorrichtung nach einem der Ansprüche 4 bis 6, **dadurch gekennzeichnet, dass** die Ausnehmung (17) durch wenigstens ein, insbesondere mehrere, die Ausnehmung (17) definierendes Wandungselement (18a - 18c) gebildet ist, wobei das wenigstens eine oder wenigstens ein Wandungselement (18a - 18c) eine radiale Auszugssicherung für ein in den Aufnahmebereich (13) eingreifendes Eingriffselement (10) eines ersten Gelenkelements (9) bildet, welche im Montagezustand der Vorrichtung (1) eine radiale Bewegung des ersten Gelenkelements (9) verhindert.

8. Vorrichtung nach einem der Ansprüche 4 bis 7, **dadurch gekennzeichnet, dass** die Ausnehmung (17) in radialer Richtung bezüglich der Zentralachse (A) der Vorrichtung (1) offen ist.

9. Vorrichtung nach Anspruch 8, **dadurch gekennzeichnet, dass** die in einem Kupplungseinrichtungsteil (5, 6) ausgebildete Ausnehmung (17) in radialer Richtung bezüglich der Zentralachse (A) der Vorrichtung (1) offen ist, wobei sie in einen sich in Umfangsrichtung um das erste oder zweite Kupplungseinrichtungsteil (5, 6) erstreckenden Aufnahmekanal (21) zur Aufnahme eines das erste oder zweite Kupplungseinrichtungsteil (5, 6) in Umfangsrichtung umspannenden, insbesondere band-, manschetten- oder schellenartigen, Spannelements (22) mündet, wobei die Ausnehmung (17) in radialer Richtung durch ein in dem Aufnahmekanal (21) aufgenommenes Spannelement (22) zumindest abschnittsweise, insbesondere vollständig, verschließbar ist, insbesondere derart, dass ein in dem Aufnahmebereich (13) aufgenommenes Eingriffselement (10) eines ersten Gelenkelements (9) in radialer Richtung nicht aus dem Aufnahmebereich (13) bewegbar ist.

10. Vorrichtung nach einem der Ansprüche 4 bis 9, **dadurch gekennzeichnet, dass** ein in einem Kupplungseinrichtungsteil (5, 6) ausgebildeter Aufnahmebereich (13) einen ersten Aufnahmebereichsabschnitt (13a) umfasst, welcher im Montagezustand der Vorrichtung (1) einen von einem Grundabschnitt (11) eines Zwischenverbindungsteils (7) stegartig abragenden Ansatz (15) aufnimmt und einen, insbesondere mit dem ersten Aufnahmebereichsabschnitt (13a) kommunizierenden, zweiten Aufnahmebereichsabschnitt (13b) umfasst, welcher im Montagezustand der Vorrichtung (1) ein an dem stegartigen Ansatz (15) ausgebildetes erstes Gelenkelement (9) aufnimmt.

11. Vorrichtung nach einem der Ansprüche 4 bis 10, **dadurch gekennzeichnet, dass** ein Grundabschnitt (16) eines ersten und/oder zweiten Kupplungseinrichtungsteils (5, 6) im Bereich seines im Montagezustand der Vorrichtung (1) dem Zwischenverbindungsteil (7) in axialer Richtung zugewandten freien Endes mit einer, insbesondere gewölbt verlaufenden, Führungsfläche (25) ausgebildet ist, und ein Grundabschnitt (11) des Zwischenverbindungsteils (7) im Bereich eines im Montagezustand der Vorrichtung (1) einem ersten oder zweiten Kupplungseinrichtungsteil (5, 6) in axialer Richtung zugewandten freien Endes mit einer, insbesondere gegengleich gewölbt verlaufenden, Gegenführungsfläche (26) ausgebildet ist.

12. Vorrichtung nach einem der Ansprüche 4 bis 11, **dadurch gekennzeichnet, dass** ein jeweiliger kupplungseinrichtungsteilseitiger Grundabschnitt (16) mit einer eine Gelenkendstellung des Zwischenverbindungsteils (7) relativ dem jeweiligen Kupplungseinrichtungsteil (5, 6) definierenden radialen Anschlagfläche (27) ausgebildet ist.

13. Vorrichtung nach einem der vorhergehenden Ansprüche, **dadurch gekennzeichnet, dass** das Zwischenverbindungsteil (7) in Umfangsrichtung segmentiert ausgebildet ist, wobei das Zwischenverbindungsteil (7) mehrere in Umfangsrichtung zu dem Zwischenverbindungsteil (7) verbindbare, jeweils wenigstens einen, insbesondere quaderartigen, Grundabschnitt (11) umfassende Zwischenverbindungsteilsegmente (7') umfasst.

14. Vorrichtung nach einem der vorhergehenden Ansprüche, **dadurch gekennzeichnet, dass** das erste und/oder zweite Kupplungseinrichtungsteil (5, 6) in Umfangsrichtung segmentiert ausgebildet ist, wobei das erste und/oder zweite Kupplungseinrichtungsteil (5, 6) mehrere in Umfangsrichtung zu dem ersten und/oder zweiten Kupplungseinrichtungsteil (5, 6) verbindbare, jeweils wenigstens einen Grundabschnitt (16) umfassende Kupplungseinrichtungsteilsegmente (5', 6')umfasst.

15. Vorrichtung nach einem der vorhergehenden Ansprüche, **dadurch gekennzeichnet, dass** ein ein erstes Gelenkelement (9) bildendes Eingriffselement (10) als ein eine Gelenkachse (GA) definierender, insbesondere zylinderartiger, Gelenkzapfen ausgebildet ist oder einen solchen umfasst und ein ein zweites Gelenkelement (12) bildendes Aufnahmeelement (14) als eine, insbesondere korrespondierende, Gelenkzapfenaufnahme ausgebildet ist oder eine solche umfasst.

## Claims

1. A device (1) for axially connecting two pipe elements (2, 3), in particular two pipe elements (2, 3) with non-identical external diameters, comprising:
- a coupling means (4) with a first coupling means part (5), having a cylindrical shape in the assembled state of said device (1), which can be assigned to a first pipe element (2), a second coupling means part (6) having a cylindrical shape in the assembled state of said device (1), which can be assigned to a second pipe element (3) to be connected axially to said first pipe element (2), and an intermediate connecting part (7) which can be arranged between the two coupling means parts (5, 6), wherein said two coupling means parts (5, 6) can be connected or are connected to each other axially via said intermediate connecting part (7), **characterized in that**
- on each of said first and second coupling means parts (5, 6) a first articulation element (9) is formed, which is formed as an engaging element (10) for engaging in a receiving region (13) of a second articulation element (12), and/or a second articulation element (12) is formed, which is formed as a receiving element (14) comprising a receiving region (13) for at least partly receiving an engaging element (10) of a first articulation element (9),
- on said intermediate connecting part (7) a first articulation element (9) is formed, which is formed as an engaging element (10) for engaging in a receiving region (13) of a second articulation element (12), and/or a second articulation element (12) is formed, which is formed as a receiving element (14) comprising a receiving region (13) for at least partly receiving an engaging element (10) of a first articulation element (9),
- wherein a first articulation element (9) formed on said first or second coupling means part (5, 6) is configured to cooperate with a second articulation element (12) formed on said intermediate connecting part (7), in particular in a positive manner, forming an articulated connection between said first or second coupling means part (5, 6) and said intermediate connecting part (7), or
a second articulation element (12) formed on said first or second coupling means part (5, 6) is configured to cooperate with a first articulation element (9) formed on said intermediate connecting part (7), in particular in a positive manner, forming an articulated connection between said first or second coupling means part (5, 6) and said intermediate connecting part (7).

2. The device according to claim 1, **characterized in that** said articulated connection formed by cooperation of a first articulation element (9) formed on said first or second coupling means part (5, 6) with a second articulation element (12) formed on said intermediate connecting part (7) or said articulated connection formed by cooperation of a second articulation element (12) formed on said first or second coupling means part (5, 6) with a first articulation element (9) formed on said intermediate connecting part (7) permits a pivoting of said intermediate connecting part (7) into multiple pivot positions relative to said first and/or second coupling means part, in particular in an angular range of between 0 and 180° in relation to a central axis (A) of said device (1), preferably in an angular range of between 0 and 90° in relation to said central axis (A) of said device (1).

3. The device according to claim 2, **characterized in that** said articulated connection of said first coupling means part (5) with said intermediate connecting part (7) and said articulated connection of said second coupling means part (6) with said intermediate connecting part (7) are non-releasable in all pivot positions of said intermediate connecting part (7) relative to said first and/or second coupling means part (5, 6).

4. The device according to one of the preceding claims, **characterized in that** said intermediate connecting part (7) comprises at least one, in particular rib- or cuboid-like, basic section (11), wherein a first articulation element (9) formed on said intermediate connecting part (7) is formed on said, in particular rib-like, basic section (11) or on a projection (15) projecting in a rib-like manner, in particular in an axial direction, from said, in particular cuboid-like, basic section (11), and/or a second articulation element (12) formed on said intermediate connecting part (7) is formed by a recess in said basic section (11) forming a receiving region (13).

5. The device according to one of the preceding claims, **characterized in that** said first and/or second coupling means part (5, 6) comprises a basic section (16), which is in particular rib- or cuboid-like, wherein a first articulation element (9) formed on said first and/or second coupling means part (5, 6) is formed on a projection projecting in a rib-like manner, in particular in an axial direction, from said basic section, and/or a second articulation element (12) formed on said first and/or second coupling means part (5, 6) is formed by a recess (17) in said basic section (16) forming a receiving region (13).

6. The device according to claim 4 or 5, **characterized in that** said recess (17) is formed by at least one, in particular multiple, wall element(s) (18a - 18c) defining said recess, wherein said at least one or at least one wall element (18a - 18c) forms an axial pull-out prevention means for an engaging element (10) of a first articulation element (9) engaging in said receiving region (13) which, in the assembled state of said device (1), prevents an axial movement of said first articulation element (9), in particular towards said coupling means part (5, 6) which is axially opposite.

7. The device according to one of claims 4 to 6, **characterized in that** said recess (17) is formed by at least one, in particular multiple, wall element(s) (18a - 18c) defining said recess (17), wherein said at least one or at least one wall element (18a - 18c) forms a radial pull-out prevention means for an engaging element (10) of a first articulation element (9) engaging in said receiving region (13), which in the assembled state of said device (1) prevents a radial movement of said first articulation element (9).

8. The device according to one of claims 4 to 7, **characterized in that** said recess (17) is open in a radial direction in relation to said central axis (A) of said device (1).

9. The device according to claim 8, **characterized in that** said recess (17) formed in a coupling means part (5, 6) is open in a radial direction in relation to said central axis (A) of said device (1), wherein it opens into a receiving channel (21) extending in a circumferential direction around said first or second coupling means part (5, 6) to receive a clamping element (22), in particular a strip-, sleeve- or clip-like clamping element (22), surrounding said first or second coupling means part (5, 6) in a circumferential direction, wherein said recess (17) can be closed off at least partly, in particular completely, in a radial direction by a clamping element (22) received in said receiving channel (21), in particular such that an engaging element (10) of a first articulation element (9) received in said receiving region (13) cannot be moved out of said receiving region (13) in a radial direction.

10. The device according to one of claims 4 to 9, **characterized in that** a receiving region (13) formed in a coupling means part (5, 6) comprises a first receiving region section (13a) which, in the assembled state of said device (1), receives a projection (15) projecting in a rib-like manner from a basic section (11) of an intermediate connecting part (7), and a second receiving region section (13b), in particular communicating with said first receiving region section (13a) which, in the assembled state of said device (1), receives a first articulation element (9) formed on said rib-like projection (15).

11. The device according to one of claims 4 to 10, **characterized in that** a basic section (16) of a first and/or second coupling means part (5, 6) is formed, in the region of its free end facing said intermediate connecting part (7) in an axial direction in the assembled state of said device (1), with a guiding surface (25), which in particular extends in a curved manner, and a basic section (11) of said intermediate connecting part (7) is formed, in the region of a free end facing a first or second coupling means part (5, 6) in an axial direction in the assembled state of said device (1), with a mating surface (26), which in particular extends in the same curved manner in the opposite direction.

12. The device according to one of claims 4 to 11, **characterized in that** a respective basic section (16) on the coupling means part side is formed with a radial stop surface (27) defining an articulation end position of said intermediate connecting part (7) relative to said respective coupling means part (5, 6).

13. The device according to one of the preceding claims, **characterized in that** said intermediate connecting part (7) is formed in a segmented manner in a circumferential direction, wherein said intermediate connecting part (7) comprises multiple intermediate connecting part segments (7') that can be connected in a circumferential direction to form said intermediate connecting part (7), each comprising at least one, in particular cuboid-like, basic section (11).

14. The device according to one of the preceding claims, **characterized in that** said first and/or second coupling means part (5, 6) is formed in a segmented manner in a circumferential direction, wherein said first and/or second coupling means part (5, 6) comprises multiple coupling means part segments (5', 6'), each comprising at least one basic section (16), which can be connected in a circumferential direction to form said first and/or second coupling means part (5, 6).

15. The device according to one of the preceding claims, **characterized in that** an engaging element (10) forming a first articulation element (9) is formed as or comprises a joint pin, in particular a cylindrical joint pin, defining an axis of articulation (GA), and a receiving element (14) forming a second articulation element (12) is formed as or comprises a joint pin receptacle, in particular a corresponding joint pin receptacle.

## Revendications

1. Dispositif (1) pour relier de manière axiale deux éléments tubulaires (2, 3), en particulier deux éléments tubulaires (2, 3) à diamètre extérieur différent, comprenant :
- un système de couplage (4) avec une première partie de système de couplage (5) pouvant être associée à un premier élément tubulaire (2), présentant dans l'état de montage du dispositif (1) une forme de type cylindre, une seconde partie de système de couplage (6) pouvant être associée à un deuxième élément tubulaire (3) à relier de manière axiale au premier élément tubulaire (2), présentant dans l'état de montage du dispositif (1) une forme de type cylindre, et une partie de liaison intermédiaire (7) pouvant être disposée entre les deux parties de système de couplage (5, 6), dans lequel les deux parties de système de couplage (5, 6) peuvent être reliées ou sont reliées l'une à l'autre de manière axiale par l'intermédiaire de la partie de liaison intermédiaire (7), **caractérisé en ce que**
- est réalisé, sur la première et sur la seconde partie de système de couplage (5, 6), respectivement un premier élément d'articulation (9), lequel est réalisé en tant qu'élément de prise (10) pour venir en prise avec une zone de logement (13) d'un deuxième élément d'articulation (12), et/ou un deuxième élément d'articulation (12) est réalisé, lequel est réalisé en tant qu'un élément de logement (14) comprenant une zone de logement (13) pour loger au moins par endroits un élément de prise (10) d'un premier élément d'articulation (9),
- est réalisé sur la partie de liaison intermédiaire (7) un premier élément d'articulation (9), lequel est réalisé en tant qu'élément de prise (10) pour venir en prise avec une zone de logement (13) d'un deuxième élément d'articulation (12), et/ou un deuxième élément d'articulation (12) est réalisé, lequel est réalisé en tant qu'un élément de logement (14) comprenant une zone de logement (13) pour loger au moins par endroits un élément de prise (10) d'un premier élément d'articulation (9),
- dans lequel un premier élément d'articulation (9) réalisé sur la première ou la seconde partie de système de couplage (5, 6) est mis au point pour coopérer avec un deuxième élément d'articulation (12) réalisé sur la partie de liaison intermédiaire (7), en particulier par complémentarité de forme, en réalisant une liaison d'articulation entre la première ou la seconde partie de système de couplage (5, 6) et la partie de liaison intermédiaire (7), ou
un deuxième élément d'articulation (12) réalisé sur la première ou la seconde partie de système de couplage (5, 6) est mis au point pour coopérer avec un premier élément d'articulation (9) réalisé sur la partie de liaison intermédiaire (7), en particulier par complémentarité de forme, en réalisant une liaison d'articulation entre la première ou la seconde partie de système de couplage (5, 6) et la partie de liaison intermédiaire (7).

2. Dispositif selon la revendication 1, **caractérisé en ce que** la liaison d'articulation réalisée par la coopération d'un premier élément d'articulation (9) réalisé sur la première ou la seconde partie de système de couplage (5, 6) avec un deuxième élément d'articulation (12) réalisé sur la partie de liaison intermédiaire (7) ou la liaison d'articulation réalisée par la coopération d'un deuxième élément d'articulation (12) réalisé sur la première ou la seconde partie de système de couplage (5, 6) avec un premier élément d'articulation (9) réalisé sur la partie de liaison intermédiaire (7) permet un pivotement de la partie de liaison intermédiaire (7) dans plusieurs positions de pivotement par rapport à la première et/ou à la seconde partie de système de couplage, en particulier dans une plage angulaire entre 0 et 180° par rapport à un axe central (A) du dispositif (1), de manière préférée dans une plage angulaire entre 0 et 90° par rapport à l'axe central (A) du dispositif (1).

3. Dispositif selon la revendication 2, **caractérisé en ce que** la liaison d'articulation de la première partie de système de couplage (5) à la partie de liaison intermédiaire (7) et la liaison d'articulation de la seconde partie de système de couplage (6) à la partie de liaison intermédiaire (7) ne peuvent être déclenchées dans toutes les positions de pivotement de la partie de liaison intermédiaire (7) par rapport à la première et/ou à la seconde partie de système de couplage (5, 6).

4. Dispositif selon l'une quelconque des revendications précédentes, **caractérisé en ce que** la partie de liaison intermédiaire (7) comprend au moins une section de base (11) en particulier de type entretoise ou carré, dans lequel un premier élément d'articulation (9) réalisé sur la partie de liaison intermédiaire (7) est réalisé sur la section de base (11) en particulier de type entretoise ou sur un appendice (15) dépassant, en particulier dans la direction axiale, à la manière d'une entretoise de la section de base (11) en particulier de type carré, et/ou un deuxième élément d'articulation (12) réalisé sur la partie de liaison intermédiaire (7) est réalisé dans la section de base (11) par un évidement formant une zone de logement (13).

5. Dispositif selon l'une quelconque des revendications précédentes, **caractérisé en ce que** la première et/ou la seconde partie de système de couplage (5, 6) comprennent une section de base (16) en particulier de type entretoise ou de type carré, dans lequel un premier élément d'articulation (9) réalisé sur la première et/ou la seconde partie de système de couplage (5, 6) est réalisé sur un appendice dépassant, en particulier dans la direction axiale, à la manière d'une entretoise de la section de base, et/ou un deuxième élément d'articulation (12) réalisé sur la première et/ou la seconde partie de système de couplage (5, 6) est réalisé dans la section de base (16) par un évidement (17) formant une zone de logement (13).

6. Dispositif selon la revendication 4 ou 5, **caractérisé en ce que** l'évidement (17) est formé par au moins un, en particulier plusieurs éléments de paroi (18a -18c) définissant l'évidement, dans lequel l'au moins un ou au moins un élément de paroi (18a - 18c) forme un blocage anti-extraction axial pour un élément de prise (10), venant en prise avec la zone de logement (13), d'un premier élément d'articulation (9), lequel empêche, dans l'état de montage du dispositif (1), un déplacement axial du premier élément d'articulation (9), en particulier en direction de la partie de système de couplage (5, 6) faisant face axialement.

7. Dispositif selon l'une quelconque des revendications 4 à 6, **caractérisé en ce que** l'évidement (17) est formé par au moins un, en particulier plusieurs éléments de paroi (18a - 18c) définissant l'évidement (17), dans lequel l'au moins un ou au moins un élément de paroi (18a - 18c) forme un blocage anti-extraction radial pour un élément de prise (10), venant en prise avec la zone de logement (13), d'un premier élément d'articulation (9), lequel empêche, dans l'état de montage du dispositif (1), un déplacement radial du premier élément d'articulation (9).

8. Dispositif selon l'une quelconque des revendications 4 à 7, **caractérisé en ce que** l'évidement (17) est ouvert dans la direction radiale par rapport à l'axe central (A) du dispositif (1).

9. Dispositif selon la revendication 8, **caractérisé en ce que** l'évidement (17) réalisé dans une partie de système de couplage (5, 6) est ouvert dans la direction radiale par rapport à l'axe central (A) du dispositif (1), dans lequel il débouche dans un canal de logement (21) s'étendant dans la direction périphérique autour de la première ou de la seconde partie de système de couplage (5, 6), pour loger un élément de serrage (22) entourant par serrage dans la direction périphérique la première ou la seconde partie de système de couplage (5, 6), en particulier de type bande, manchon ou collier de serrage, dans lequel l'évidement (17) peut être fermé au moins par endroits, en particulier en totalité, dans la direction radiale par un élément de serrage (22) logé dans le canal de logement (21), en particulier de telle manière qu'un élément de prise (10), logé dans la zone de logement (13), d'un premier élément d'articulation (9) ne peut pas être déplacé hors de la zone de logement (13) dans la direction radiale.

10. Dispositif selon l'une quelconque des revendications 4 à 9, **caractérisé en ce qu'**une zone de logement (13) réalisée dans une partie de système de couplage (5, 6) comprend une première section de zone de logement (13a), laquelle loge un appendice (15) dépassant d'une section de base (11) d'une partie de liaison intermédiaire (7) à la manière d'une entretoise dans l'état de montage du dispositif (1) et comprend une deuxième section de zone de logement (13b) communiquant en particulier avec la première section de zone de logement (13a), laquelle loge un premier élément d'articulation (9) réalisé sur l'appendice (15) de type entretoise dans l'état de montage du dispositif (1).

11. Dispositif selon l'une quelconque des revendications 4 à 10, **caractérisé en ce qu'**une section de base (16) d'une première et/ou d'une seconde partie de système de couplage (5, 6) est réalisée dans la zone de son extrémité libre tournée dans la direction axiale vers la partie de liaison intermédiaire (7) dans l'état de montage du dispositif (1) avec une surface de guidage (25) s'étendant en particulier de manière bombée, et une section de base (11) de la partie de liaison intermédiaire (7) est réalisée dans la zone d'une extrémité libre tournée dans la direction axiale vers une première ou une seconde partie de système de couplage (5, 6) dans l'état de montage du dispositif (1) avec une contre- surface de guidage (26) s'étendant en particulier de manière bombée dans le sens inverse.

12. Dispositif selon l'une quelconque des revendications 4 à 11, **caractérisé en ce qu'**une section de base (16) respective du côté de la partie de système de couplage est réalisée avec une surface de butée radiale (27) définissant une position finale d'articulation de la partie de liaison intermédiaire (7) par rapport à la partie de système de couplage (5, 6) respective.

13. Dispositif selon l'une quelconque des revendications précédentes, **caractérisé en ce que** la partie de liaison intermédiaire (7) est réalisée de manière segmentée dans la direction périphérique, dans lequel la partie de liaison intermédiaire (7) comprend plusieurs segments de partie de liaison intermédiaire (7') pouvant être reliés dans la direction périphérique en la partie de liaison intermédiaire (7), comprenant respectivement au moins une section de base (11) en particulier de type carré.

14. Dispositif selon l'une quelconque des revendications précédentes, **caractérisé en ce que** la première et/ou la seconde partie de système de couplage (5, 6) sont réalisées de manière segmentée dans la direction périphérique, dans lequel la première et/ou la seconde partie de système de couplage (5, 6) comprennent plusieurs segments de partie de système de couplage (5', 6') pouvant être reliés dans la direction périphérique en la première et/ou la seconde partie de système de couplage (5, 6), comprenant respectivement au moins une section de base (16).

15. Dispositif selon l'une quelconque des revendications précédentes, **caractérisé en ce qu'**un élément de prise (10) formant un premier élément d'articulation (9) est réalisé en tant qu'un tourillon d'articulation, en particulier de type cylindrique, définissant un axe d'articulation (GA) ou comprend un élément de ce type et un élément de logement (14) formant un deuxième élément d'articulation (12) est réalisé en tant qu'un logement de tourillon d'articulation, en particulier correspondant ou comprend un élément de ce type.
